# EUROPEAN PATENT APPLICATION

(11) **EP 4 529 251 A2**
(43) Date of publication of application: **26.03.2025**
(21) Application number: 25156744.2
(22) Date of filing: 23.01.2023
(51) Int. Cl.: H04W 12/08

(54) **RESOURCE OWNER CONSENT INFORMATION MANAGEMENT**

(30) Priority: 28.01.2022 US 202263304261 P
(62) Divisional of application: 23703109.1
(71) Applicant: Lenovo (Singapore) Pte. Ltd., New Tech Park 556741 (SG)
(72) Inventor: BASKARAN, Sheeba Backia Mary, 61381 Friedrichsdorf (DE); KUNZ, Andreas, 68526 Ladenburg (DE)
(74) Representative: Openshaw & Co.

(57) **Abstract**

Various aspects of the present disclosure relate to a resource owner (e.g., a user or UE) that is authenticated and authorized to access or register with a common application programming interface (API) framework (CAPIF) function. Security credentials (e.g., a CAPIF key K_{CAPIF}) are generated and a temporary user identity is used to preserve confidentiality of identity of the resource owner. The K_{CAPIF} is subsequently used to provide a secure session when registering with the CAPIF function. Furthermore, the K_{CAPIF} is used to provide a secure session when providing consent data from the resource owner to the CAPIF.

## Description

### RELATED APPLICATION

This application claims priority to U.S. Patent Application Serial No. 63/304,261 filed January 28, 2022 entitled "Resource Owner Consent Information Management," the disclosure of which is incorporated by reference herein in its entirety.

### TECHNICAL FIELD

The present disclosure relates to wireless communications, and more specifically to managing resource owner consent information.

### BACKGROUND

A wireless communications system may include one or multiple network communication devices, such as base stations, which may be otherwise known as an eNodeB (eNB), a next-generation NodeB (gNB), or other suitable terminology. Each network communication device, such as a base station, may support wireless communications for one or multiple user communication devices, which may be otherwise known as user equipment (UE), or other suitable terminology. The wireless communications system may support wireless communications with one or multiple user communication devices by utilizing resources of the wireless communication system, such as time resources (e.g., symbols, slots, subslots, mini-slots, aggregated slots, subframes, frames, or the like) or frequency resources (e.g., subcarriers, carriers). Additionally, the wireless communications system may support wireless communications across various radio access technologies (RATs) including third generation (3G) RAT, fourth generation (4G) RAT, fifth generation (5G) RAT, and other suitable RATs beyond 5G. In some cases, a wireless communications system may be a non-terrestrial network (NTN), which may support various communication devices for wireless communications in the NTN. For example, an NTN may include network entities onboard non-terrestrial vehicles such as satellites, unmanned aerial vehicles (UAV), and high-altitude platforms systems (HAPS), as well as network entities on the ground, such as gateway entities capable of transmitting and receiving over long distances.

Some wireless communications systems, such as 5G systems (5GS), support user consent for accessing data. This user consent, however, is static in nature. For example, when a user establishes a subscription with an operator, high level general consent data is received from the user and stored as part of the subscription data. When a service subsequently requests data, this consent data is used to determine whether to provide the requested data.

### SUMMARY

A resource owner (e.g., a user or UE) can be authenticated and authorized to access or register with a common application programming interface (API) framework (CAPIF) function to enable real-time user consent driven API invocation authorization and secured user service data exposure by the network. In one or more implementations, security credentials or context for the resource owner and CAPIF function are generated and used to enable the CAPIF to support authentication of the resource owner. Additionally or alternatively, a temporary user identity (e.g., a CAPIF-UE identifier (ID), a generic public subscription identifier (GPSI), or a resource owner ID) can be used to ensure or preserve confidentiality of the external identity of the UE (e.g., the mobile subscriber integrated services digital network number (MSISDN)) of the UE during the API invocation supported by CAPIF. Additionally or alternatively, the resource owner registers with the CAPIF, allowing the resource owner to manage and control user related service data exposure to application servers/functions (that may belong to a third party) that offer service to the user applications (e.g., application clients). By performing one or a combination of these techniques, the resource owner is able to be authenticated and securely authorize user data related to the resource owner to be exposed to any user related services (e.g., in response to an invoked API).

Some implementations of the method and apparatuses described herein may include wireless communication at a device (e.g., at a UE), which includes transmitting, to a unified data management (UDM), an authentication request for a UE; receiving, from the UDM, an authentication response including an indication; deriving, in response to receiving the indication, CAPIF security information; and storing the CAPIF security information as a UE context along with an identifier of the UE.

In some implementations of the method and apparatuses described herein, the authentication response further including one or more of a CAPIF function identifier, a CAPIF function address, a GPSI, and a UE identifier. Additionally or alternatively, the CAPIF security information comprises one or more of a CAPIF-UE ID and a CAPIF key (K_{CAPIF}). Additionally or alternatively, the K_{CAPIF} is derived from an authentication server function (AUSF) key (K_{AUSF}) or an authentication and key management for application key (K_{AKMA}), and using as input parameters one or more of: a CAPIF key word, a UE identifier, a CAPIF function identifier, a serving network identifier, a home network identifier, and a length of each of the one or more input parameters. Additionally or alternatively, the CAPIF-UE ID is derived from the K_{CAPIF} or a K_{AUSF} or a K_{AKMA} and using as input parameters one or more of: a CAPIF-UE ID key word, a UE identifier (which can be a subscription identifier such as SUPI), a CAPIF function identifier, a serving network identifier, a home network identifier, and a length of each of the one or more input parameters. Additionally or alternatively, transmitting, to a UE via an access and mobility management function (AMF), a CAPIF registration related information that includes one or more of: a CAPIF function identifier, a CAPIF function address, a GPSI, and a CAPIF-UE ID.

Some implementations of the method and apparatuses described herein may include wireless communication at a device (e.g., at a UE), which includes receiving, from a UE, a request to initiate resource owner registration for the UE, the request including an identifier of the UE; identifying or retrieving, in response to the request, a K_{CAPIF} associated with the UE identifier; establish, using a shared key based on the K_{CAPIF}, a secure session with the UE; receive, from the UE via the secure session, a resource owner registration request including a CAPIF-UE ID; verify, in response to the resource owner registration request, whether the CAPIF-UE ID is the same as a locally stored CAPIF-UE ID for the UE; and return, to the UE via the secure session, a resource owner registration response including a resource owner ID if the received CAPIF-UE ID is the same as the locally stored CAPIF-UE ID for the UE or a failure indication if the CAPIF-UE ID is not the same as the locally stored CAPIF-UE ID for the UE.

In some implementations of the method and apparatuses described herein, the shared key is the K_{CAPIF}. Additionally or alternatively, the shared key is derived from the K_{CAPIF} using as input parameters one or more of: the UE identifier, the CAPIF-UE ID, a CAPIF registration key word, a common application programming interface framework function identifier, a random number, and a nonce included in the request to initiate resource owner registration. Additionally or alternatively, the resource owner registration response includes a failure indication if there is no CAPIF-UE ID available for the UE. Additionally or alternatively, the resource owner ID is derived from the shared key using as input parameters one or more of: the resource owner identifier, a UE identifier, a CAPIF function identifier, a serving network identifier, an HN identifier, and a length of each of the one or more input parameters. Additionally or alternatively, the resource owner registration response further includes a lifetime parameter indicating a duration of validity of the resource owner ID.

Some implementations of the method and apparatuses described herein may include wireless communication at a device (e.g., at a UE), which includes receiving, from an API invoker, a first request message; fetching, in response to the first request message, resource owner data and a resource owner key from a CAPIF function; deriving an API exposing function (AEF) key based on the resource owner key; transmitting, to the resource owner, a second request message that includes one or more of: an AEF-ID, a target UE identifier, an application/function identifier, and service data set type identifiers; establishing, using the AEF key, a secure connection with the resource owner; receiving, from the resource owner via the secure connection, a second response message that includes one or more of: a UE identifier and a user consent data set; and storing the user consent data set along with UE identifier.

In some implementations of the method and apparatuses described herein, the second request message further includes a resource owner identifier. Additionally or alternatively, the user consent data set includes one or more of: an application/function identifier, one or more service data types, and a consent status. Additionally or alternatively, the consent status is indicated as one of: accept or allowed, denied or not allowed, revoked/updated. Additionally or alternatively, a third response message indicating the result of API invocation (for service data exposure) based on the user consent status is transmitted to the API invoker. Additionally or alternatively, the AEF key is derived from the resource owner key and using as input parameters one or more of: a resource owner identifier, a UE identifier, a freshness parameter, application/function identifiers, a CAPIF function identifier or AEF identifier, and a length of each input parameter. Additionally or alternatively, the freshness parameter comprises one or more of a counter, a random number, and a nonce. Additionally or alternatively, the AEF key comprises a K_{CAPIF}.

### BRIEF DESCRIPTION OF THE DRAWINGS

Various aspects of the present disclosure for resource owner consent information management are described with reference to the following Figures. The same numbers may be used throughout to reference like features and components shown in the Figures.
FIG. 1 an example of a wireless communications system that supports resource owner consent information management in accordance with aspects of the present disclosure.
FIG. 2 illustrates an example of a CAPIF system that supports resource owner consent information management in accordance with aspects of the present disclosure.
FIG. 3 illustrates an example resource owner registration procedure that supports resource owner consent information management in accordance with aspects of the present disclosure.
FIG. 4 illustrates an example consent procedure that supports resource owner consent information management in accordance with aspects of the present disclosure.
FIG. 5 illustrates an example resource owner authentication and authorization procedure that supports resource owner consent information management in accordance with aspects of the present disclosure.
FIG. 6 illustrates an example resource owner registration procedure that supports resource owner consent information management in accordance with aspects of the present disclosure.
FIG. 7 illustrates an example user consent collection procedure that supports resource owner consent information management in accordance with aspects of the present disclosure.
FIG. 8 illustrates an example of a block diagram of a device that supports resource owner consent information management in accordance with aspects of the present disclosure.
FIG. 9 illustrates an example of a block diagram of a device that supports resource owner consent information management in accordance with aspects of the present disclosure.
FIGs. 10, 11, 12, 13, 14, 15, 16, 17, and 18 illustrate flowcharts of methods that support resource owner consent information management in accordance with aspects of the present disclosure.

### DETAILED DESCRIPTION

A resource owner (e.g., a user or UE) can be authenticated and authorized to access or register with a CAPIF function to enable real-time user consent driven API invocation authorization and secured user service data exposure by the network. In one or more implementations, security credentials or context for the resource owner and CAPIF function are generated and used to enable the CAPIF to support authentication of the resource owner. This allows a temporary user identity (e.g., a CAPIF-UE ID, a GPSI, or a resource owner ID) to be generated that can be used to ensure or preserve confidentiality of the external identity of the UE (e.g., the MSISDN of the UE during the API invocation supported by CAPIF). This further generates a key (e.g., K_{CAPIF}) that can be used to provide a secure session between the resource owner and an AEF, as discussed in more detail below.

Additionally or alternatively, the resource owner registers to the CAPIF to manage and control user related service data exposure to application client or to application servers/functions (that may belong to a third party) that offer service to the user applications (e.g., application clients). This registration is performed securely using the previously generated key (e.g., K_{CAPIF}), allowing the CAPIF to verify the resource owner is who it claims to be and preventing the registration information from being tampered with or altered.

Additionally or alternatively, once registered the resource owner is able to provide consent data to the CAPIF indicating whether user data can be exposed to an API invoker. This consent data is provided securely using the previously generated key (e.g., K_{CAPIF}) or a key derived from the K_{CAPIF}. This prevents the registration information from being tampered with or altered, such as preventing an attacker from changing consent data indicating "denied" to consent data indicating "approved."

Using these techniques, the resource owner is able to be authenticated and securely authorize user data related to the resource owner to be exposed to any user related services (e.g., in response to an invoked API). Accordingly, before accepting, providing, or exposing any user related data to the API invoker, the exposing function checks the user consent information related to the invoked API. For example, if the invoked API is a location service API, then the UE related consent information for that location service or location exposure service is checked before exposing the data of the user. The registration of the resource owner (e.g., the UE) and communication of the consent information from the resource owner is done securely, ensuring the accuracy of the consent information provided by the resource owner.

Aspects of the present disclosure are described in the context of a wireless communications system. Aspects of the present disclosure are further illustrated and described with reference to device diagrams and flowcharts that relate to resource owner consent information management.

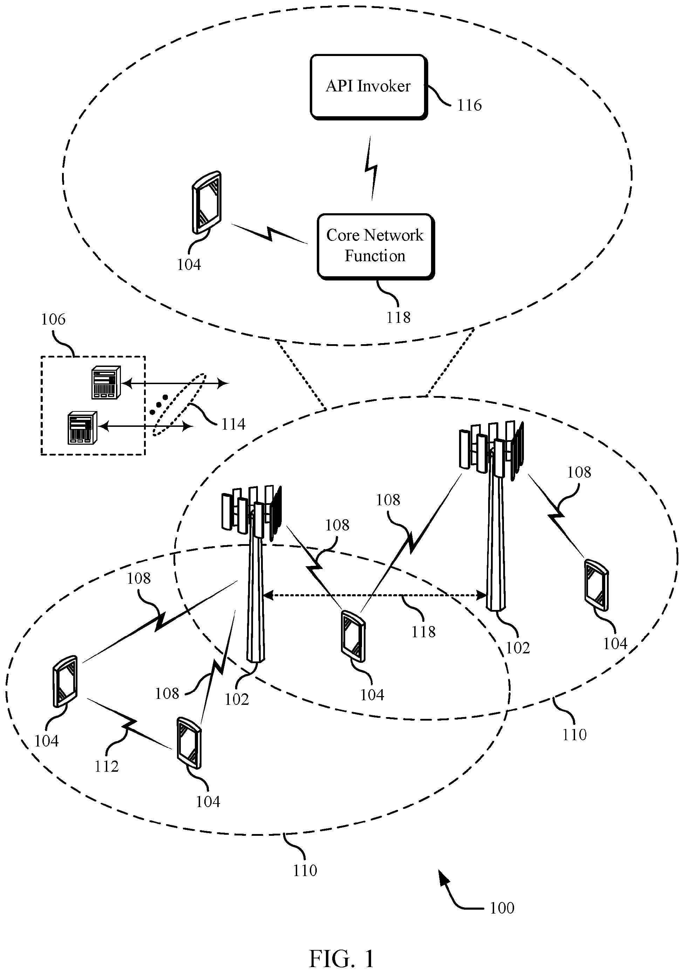

**FIG. 1** illustrates an example of a wireless communications system 100 that supports resource owner consent information management in accordance with aspects of the present disclosure. The wireless communications system 100 may include one or more base stations 102, one or more UEs 104, a core network 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as a NR network. In other implementations, the wireless communications system 100 may be a combination of a 4G network and a 5G network. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more base stations 102 may be dispersed throughout a geographic region to form the wireless communications system 100. One or more of the base stations 102 described herein may be, or include, or may be referred to as a base transceiver station, an access point, a NodeB, an eNodeB (eNB), a next-generation NodeB (gNB), a Radio Head (RH), a relay node, an integrated access and backhaul (IAB) node, or other suitable terminology. A base station 102 and a UE 104 may communicate via a communication link 108, which may be a wireless or wired connection. For example, a base station 102 and a UE 104 may perform wireless communication over a NR-Uu interface.

A base station 102 may provide a geographic coverage area 110 for which the base station 102 may support services (e.g., voice, video, packet data, messaging, broadcast, etc.) for one or more UEs 104 within the geographic coverage area. For example, a base station 102 and a UE 104 may support wireless communication of signals related to services (e.g., voice, video, packet data, messaging, broadcast, etc.) according to one or multiple radio access technologies. In some implementations, a base station 102 may be moveable, such as when implemented as a gNB onboard a satellite or other non-terrestrial station (NTS) associated with a non-terrestrial network (NTN). In some implementations, different geographic coverage areas 110 associated with the same or different radio access technologies may overlap, and different geographic coverage areas 110 may be associated with different base stations 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs 104 may be dispersed throughout a geographic region or coverage area 110 of the wireless communications system 100. A UE 104 may include or may be referred to as a mobile device, a wireless device, a remote device, a handheld device, a customer premise equipment (CPE), a subscriber device, or as some other suitable terminology. In some implementations, the UE 104 may be referred to as a unit, a station, a terminal, or a client, among other examples. Additionally, or alternatively, a UE 104 may be referred to as an Internet-of-Things (IoT) device, an Internet-of-Everything (IoE) device, or as a machine-type communication (MTC) device, among other examples. In some implementations, a UE 104 may be stationary in the wireless communications system 100. In other implementations, a UE 104 may be mobile in the wireless communications system 100, such as an earth station in motion (ESIM).

The one or more UEs 104 may be devices in different forms or having different capabilities. Some examples of UEs 104 are illustrated in FIG. 1. A UE 104 may be capable of communicating with various types of devices, such as the base stations 102, other UEs 104, or network equipment (e.g., the core network 106, a relay device, a gateway device, an integrated access and backhaul (IAB) node, a location server that implements the location management function (LMF), or other network equipment). Additionally, or alternatively, a UE 104 may support communication with other base stations 102 or UEs 104, which may act as relays in the wireless communications system 100.

A UE 104 may also support wireless communication directly with other UEs 104 over a communication link 112. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 112 may be referred to as a sidelink. For example, a UE 104 may support wireless communication directly with another UE 104 over a PC5 interface.

A base station 102 may support communications with the core network 106, or with another base station 102, or both. For example, a base station 102 may interface with the core network 106 through one or more backhaul links 114 (e.g., via an S1, N2, or other network interface). The base stations 102 may communicate with each other over the backhaul links 114 (e.g., via an X2, Xn, or another network interface). In some implementations, the base stations 102 may communicate with each other directly (e.g., between the base stations 102). In some other implementations, the base stations 102 may communicate with each other indirectly (e.g., via the core network 106). In some implementations, one or more base stations 102 may include subcomponents, such as an access network entity, which may be an example of an access node controller (ANC). The ANC may communicate with the one or more UEs 104 through one or more other access network transmission entities, which may be referred to as remote radio heads, smart radio heads, gateways, transmission-reception points (TRPs), and other network nodes and/or entities.

The core network 106 may support user authentication, access authorization, tracking, connectivity, and other access, routing, or mobility functions. The core network 106 may be an evolved packet core (EPC), or a 5G core (5GC), which may include a control plane entity that manages access and mobility (e.g., a mobility management entity (MME), an access and mobility management functions), and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management for the one or more UEs 104 served by the one or more base stations 102 associated with the core network 106.

According to implementations, one or more of the UEs 104 and core network 106 devices are operable to implement various aspects of resource owner consent information management, as described herein. For instance, an API invoker 116 requests access to a service or data by invoking an API that is exposed by a core network function (CNF) 118. The CNF 118 is part of the CAPIF implemented by the core network 106. The API invoker 116 is implemented on one or more devices (e.g., within the core network 106 or external to the core network 106). The CNF 118 communicates, optionally via one or more additional CNFs, with the UE 104 to obtain consent data indicating whether to allow the API invoker 116 access to the requested service or data. This communication is performed in a secure manner, preventing an attacker from tampering with or altering the consent data.

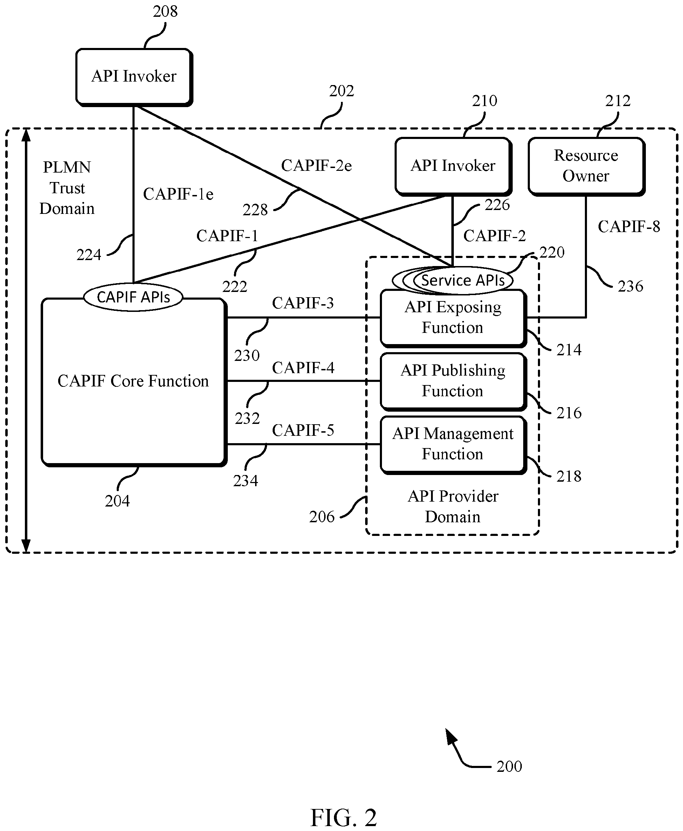

**FIG. 2** illustrates an example of a CAPIF system 200 that supports resource owner consent information management in accordance with aspects of the present disclosure. The CAPIF system 200 may use the wireless communications system 100 and/or be implemented with the wireless communications system. The CAPIF system 200 provides a unified bound API framework across multiple 3^{rd} Generation Partnership Project (3GPP) functions. The CAPIF system 200 hosts APIs of a public land mobile network (PLMN) trust domain 202 and allows third parties to leverage the CAPIF framework to host their APIs.

The CAPIF system 200 includes a CAPIF core function (CCF) 204, an API provider domain 206, one or more API invokers 208 and 210, and a resource owner 212. The resource owner 212 is, for example, a user or a UE. An API invoker can be external to the PLMN trust domain 202 (e.g., API invoker 208) or internal to the PLMN trust domain 202 (e.g., API invoker 210). Each API invoker 208 is an entity (e.g., an application) that requests service from the service providers via the service APIs 220.

The CCF 204 includes one or more of the following capabilities:
- Authenticating the API invoker based on the identity and other information required for authentication of the API invoker;
- Supporting mutual authentication with the API invoker;
- Providing authorization for the API invoker prior to accessing the service API;
- Publishing, storing and supporting the discovery of service APIs information;
- Controlling the service API access based on PLMN operator configured policies;
- Storing the logs for the service API invocations and providing the service API invocation logs to authorized entities;
- Charging based on the logs of the service API invocations;
- Monitoring the service API invocations;
- Onboarding a new API invoker and offboarding an API invoker;
- Storing policy configurations related to CAPIF and service APIs;
- Support accessing the logs for auditing (e.g. detecting abuse); and
- Supports publishing, discovery of service APIs information with another CAPIF core function in CAPIF interconnection.
- Supports resource owner registration using any new CAPIF interface.

The API provider domain 206 includes an AEF 214, an API publishing function 216, and an API management function 218. The AEF 214 is the provider of the service APIs 220 and is also the service communication entry point of the service APIs 220 to the API invokers 208 and 210. The API exposing function includes one or more of the following capabilities: authenticating the API invoker based on the identity and other information required for authentication of the API invoker provided by the CAPIF core function; validating the authorization provided by the CAPIF core function; and logging the service API invocations at the CAPIF core function.

The API publishing function 216 enables the API provider to publish the service APIs information in order to enable the discovery of service APIs by the API invoker. The API publishing function includes the capability of publishing the service CAPIF information of the CAPIF provider to the CAPIF core function.

The API management function 218 enables the API provider to perform administration of the service APIs. The API management function includes one or more of the following capabilities: auditing the service API invocation logs received from the CAPIF core function; monitoring the events reported by the CAPIF core function; configuring the CAPIF provider policies to the CAPIF core function; monitoring the status of the service APIs; onboarding the new API invokers and offboarding API invokers; and registering and maintaining registration information of the API provider domain functions on the CAPIF core function.

The CAPIF system 200 includes multiple reference points, each reference point indicating interactions between two CAPIF functions. These reference points include CAPIF-1 reference point 222, CAPIF-1e reference point 224, CAPIF-2 reference point 226, CAPIF-2e reference point 228, CAPIF-3 reference point 230, CAPIF-4 reference point 232, CAPIF-5 reference point 234, and CAPIF-8 reference point 236.

The CAPIF-1 reference point 222, which exists between the API invoker 210 and the CCF 204, is used for the API invoker 210 within the PLMN trust domain 202 to discover service APIs 220, to authenticate and to get authorization. The CAPIF-1 reference point supports: authenticating the API invoker 210 based on the identity and credentials of the API invoker 210; mutual authentication between the API invoker 210 and the CCF 204; providing authorization for the API invoker 210 prior to accessing the service API 220; and discovering the service APIs 220 information.

The CAPIF-1e reference point 224, which exists between the API invoker 208 and the CCF 204, is used for the API invoker 208 outside the PLMN trust domain 202 to discover service APIs 220, to authenticate and to get authorization. The CAPIF-1e reference point 224 supports all the functions of the CAPIF-1 reference point 222, although for the API invoker 208 rather than the API invoker 210.

The CAPIF-2 reference point 226, which exists between the API invoker 210 and the AEF 214 belonging to the same trust domain, is used for the API invoker 210 to communicate with the service APIs 220. The CAPIF-2 reference point 226 supports: authenticating the API invoker 210 based on the identity and credentials of the API invoker 210; authorization verification for the API invoker 210 upon accessing the service API; and invocation of service APIs 220.

The CAPIF-2e reference point 228, which exists between the API invoker 208 and the AEF 214 belonging to a different trust domain, is used for the API invoker 208 to communicate with the service APIs 220. The CAPIF-2e reference point 228 supports all the functions of CAPIF-2 reference point 226, although for the API invoker 208 rather than the API invoker 210.

The CAPIF-3 reference point 230, which exists between the AEF 214 and the CCF 204, is used for exercising access and policy related control for service API communications initiated by the API invoker (e.g., the API invoker 208 or the API invoker 210). The CAPIF-3 reference point 230 supports: authenticating the API invoker based on the identity and credentials of the API invoker; providing authorization for the API invoker prior to accessing the service API; authorization verification for the API invoker upon accessing the service API 220; controlling the service API 220 access based on PLMN operator configured policies; logging the service API 220 invocations; and charging the service API 220 invocations.

The CAPIF-4 reference point, which exists between the API publishing function 216 and the CCF 204, is used for publishing the service API 220 information. The CAPIF-4 reference point 232 supports publishing the service APIs 220 information by the API publishing function 216.

The CAPIF-5 reference point 234, which exists between the API management function 218 and the CCF, is used for management of service API 220, API invoker (e.g., the API invoker 208 or the API invoker 210) and API provider domain function information. The CAPIF-5 reference point 234 supports: accessing the service API 220 invocation logs by the API management function 218; enabling the API management function 218 to monitor the events reported due to the service APIs 220 invocations; onboarding new API invokers by provisioning the API invoker information at the CCF, requesting explicit grant of new API invokers onboarding and confirming onboarding success; offboarding API invokers; enabling the API management function 218 to configure policies at the CCF e.g. service API invocation throttling, blocking API invocation for certain duration; enabling the API provider to monitor the status of service APIs 220 (e.g. pilot or live status, start or stop status of service API 220); registering API provider domain functions on the CCF; and update of the registration information of API provider domain functions on the CCF.

The CAPIF-8 reference point 236, which exists between the resource owner 212 and the AEF 214, is used for allowing resource owner consent for accepting, providing, or exposing user related data (e.g., resource owner related data) to a service API 220. The CAPIF-8 reference supports: generating CAPIF keys for the resource owner 212 CAPIF authentication and authorization; registering the resource owner 212 for CAPIF authentication and authorization; and performing user consent collection upon API invocation.

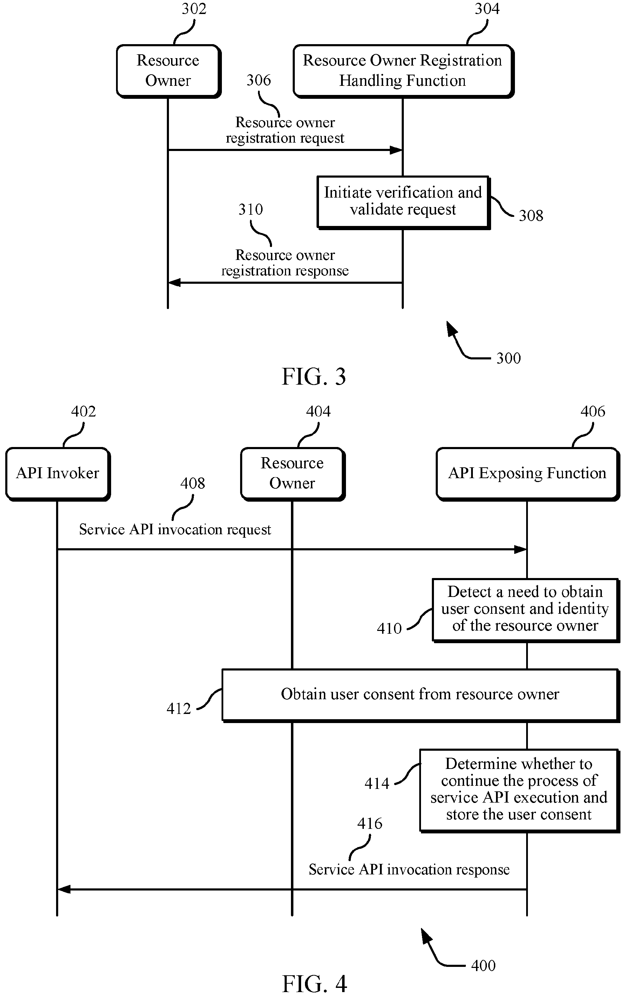

**FIG. 3** illustrates an example resource owner registration procedure 300 that supports resource owner consent information management in accordance with aspects of the present disclosure. The procedure 300 illustrates, for example, resource owner registration for CAPIF. The procedure 300 illustrates interaction between a resource owner 302 and a resource owner registration handling function 304. In one or more implementations, the resource owner registration handling function 304 is included in the core network 106 of FIG. 1.

At 306, the resource owner 302 sends, to the resource owner registration handling function 304, a Resource owner registration request with a UE ID (e.g., a GPSI).

At 308, the resource owner registration handling function 304 checks whether a CAPIF security context is locally available for the UE ID.

At 310, the resource owner registration handling function 304 sends, to the Resource owner, a resource owner registration response. The response indicates that the resource owner 302 is registered for CAPIF if a CAPIF security context is locally available for the UE ID, and that the resource owner is not registered for CAPIF if a CAPIF security context is not locally available for the UE ID.

In one or more implementations, the techniques discussed herein implement one or more portions of the procedure 300, such as the actions at 308.

**FIG. 4** illustrates an example consent procedure 400 that supports resource owner consent information management in accordance with aspects of the present disclosure. The procedure 400 illustrates, for example, obtaining user consent for CAPIF. The procedure 400 illustrates interaction between various ones of an API invoker 402, a resource owner 404, and an AEF 406. In one or more implementations, the AEF 406 is included in the core network 106 of FIG. 1.

At 408, the API invoker 402 sends a Service API invocation request to the AEF 406, which requires user consent of the resource owner.

At 410, the AEF 406 determines if resource owner consent is required to execute the service API. If the user consent is not required for the API invocation, the actions at 412 and 414 are skipped.

At 412, the AEF 406 communicates with the resource owner 404 to obtain consent from the resource owner 404 for the API invoker 402 to invoke the API.

At 414, if the API invocation is allowed, the process for service API execution is continued. If the API invocation is denied, the service API execution is rejected. The result of the user consent response is stored in the API exposing function.

At 416, the API exposing function sends a service API invocation response to the API invoker based on the result of the service API execution.

In one or more implementations, the techniques discussed herein implement one or more portions of the procedure 400, such as the actions at 410, 412, and 416.

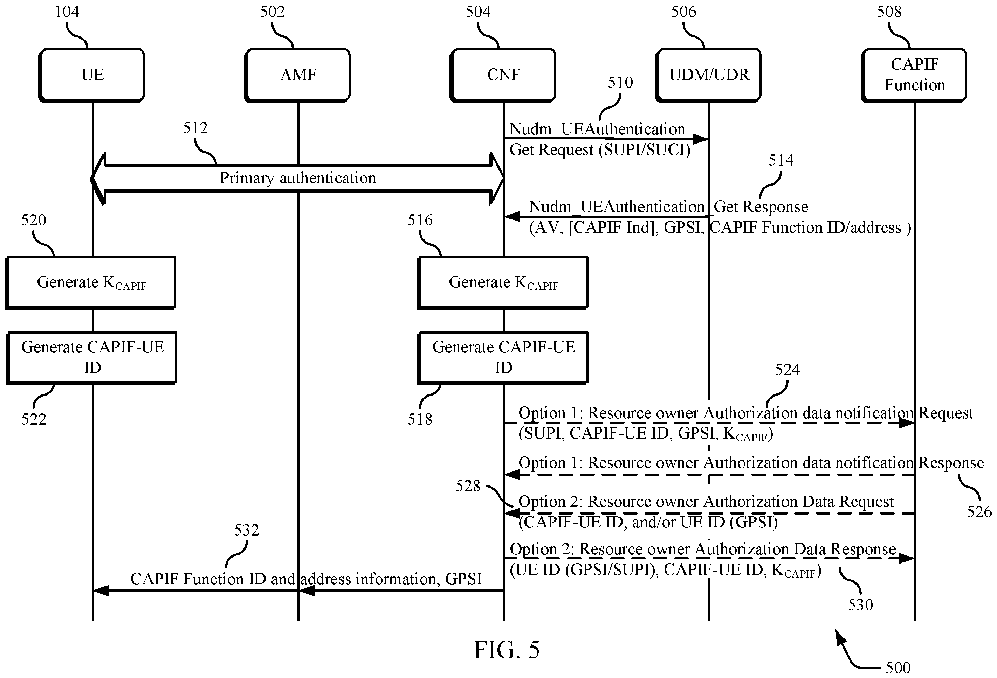

**FIG. 5** illustrates an example resource owner authentication and authorization procedure 500 that supports resource owner consent information management in accordance with aspects of the present disclosure. The procedure 500 illustrates, for example, CAPIF key generation for resource owner CAPIF authentication and authorization. The procedure 500 illustrates interaction between various ones of the UE 104, an access and mobility management function (AMF) 502, a CNF 504 (e.g., an AUSF), a UDM / unified data repository (UDR) 506, and a CAPIF function 508 (e.g., a CAPIF Core function, an API exposing function, or a network exposure function (NEF) implementing API exposing function). In one or more implementations, the AMF 502, the CNF 504, the UDM/UDR 506, and the CAPIF function 508 are included in the core network 106 of FIG. 1.

The procedure 500 describes how the security credentials/context for the UE (e.g., user or the resource owner) and CAPIF function are generated and used to enable the CAPIF to support authentication of the resource owner (e.g., during resource owner registration), and how the temporary user identity (e.g., CAPIF-UE ID, GPSI, resource owner ID) can be used to ensure or preserve confidentiality of the UE's external identity (e.g., MSISDN) during the API invocation supported by CAPIF. A CAPIF function discussed herein can be any function in the CAPIF framework (e.g., a CCF, an AEF, a resource owner registration function, an API provider domain function, any function that belongs to CAPIF, a core network function (e.g., NEF implementing CAPIF function)). A core network function discussed herein can be an AUSF, an AMF, any network function (NF) in the core network 106 of FIG. 1, and so forth.

In one or more implementations, there is no separate authentication of the UE or resource owner to support CAPIF/resource owner functionality. Instead, CAPIF reuses the 5G primary authentication procedure executed e.g., during the UE registration to authenticate the UE. A successful 5G primary authentication results in an authentication server function key (K_{AUSF}) being stored at the AUSF and the UE.

At 510 and 512, during the primary authentication procedure, the AUSF interacts with the UDM/UDR 506 in order to fetch authentication information such as subscription credentials (e.g., authentication and key agreement (AKA) authentication vectors) and the authentication method using the Nudm_UEAuthentication_Get Request service operation.

At 514, in the response, the UDM may also indicate to the AUSF whether CAPIF anchor/root keys need to be generated for the UE. If the CAPIF indication (e.g., CAPIF Ind) is included, the UDM may also include any additional identifier of the UE such as a GPSI and a CAPIF function ID or address. Additionally or alternatively, the CAPIF indication can be termed as resource owner indication/user consent service activation related indication.

If the AUSF receives the CAPIF indication from the UDM, the CNF 504 (e.g., the AUSF) at 516 and 518 can store the K_{AUSF} and generate the K_{CAPIF} and the CAPIF-UE ID from K_{AUSF} after the primary authentication procedure 512 is successfully completed. Generation of K_{CAPIF} and the CAPIF-UE ID is discussed in more detail below.

The UE 104 at 520 and 522 can also generate the K_{CAPIF} and the CAPIF-UE ID from K_{AUSF} before initiating communication with the CAPIF function 508.

Additionally or alternatively, the CNF 504 and the UE 104 can generate the K_{CAPIF} and the CAPIF-UE ID from a K_{AKMA} before initiating communication with the CAPIF function 508.

Additionally or alternatively, the CNF 504 and the UE 104 can generate the CAPIF-UE ID from the K_{CAPIF}.

Two options are illustrated, one at 524 and 526, and the other at 528 and 530.

In one or more implementations, at 524 after CAPIF key material (e.g., K_{CAPIF} and CAPIF-UE ID) is generated, the CNF 504 selects the CAPIF function 508 based on the CAPIF function ID and/or the CAPIF address received at 506, and/or based on local policy can send the generated K_{CAPIF} and the CAPIF-UE ID to the CAPIF function 508 together with the subscription permanent identifier (SUPI) and/or GPSI of the UE 104 using the Resource owner Authorization data notification/Request service operation. The CAPIF function 508 can store the latest information (e.g., SUPI, CAPIF-UE ID, GPSI, K_{CAPIF}) sent by the CNF 504. Additionally or alternatively, the Resource owner Authorization data notification/Request can be termed as a Resource owner CAPIF registration data notification/request.

At 526, the CAPIF function 508 sends the response as 'success', to the CNF 504 using the Resource owner Authorization data notification/Response service operation.

Additionally or alternatively, acts 528 and 530 are performed, such as in situations where the CAPIF function 508 needs CAPIF security credentials/context of a resource owner or user.

In one or more implementations, at 528, the CAPIF function 508 sends a Resource owner Authorization data request service operation to the CNF 504 with UE IDs such as GPSI and/or CAPIF-UE ID.

At 530, the CNF 504, based on the UE IDs such as GPSI and/or CAPIF-UE ID, identifies locally stored CAPIF security credentials/context (e.g., the K_{CAPIF} and the CAPIF-UE ID) and sends a Resource owner Authorization data response service operation to the CAPIF function 508, which can include the SUPI, the K_{CAPIF}, and the CAPIF-UE ID. Additionally or alternatively, the CNF 504, based on the UE IDs such as GPSI and/or CAPIF-UE ID, identifies the UE context and derives CAPIF security credentials/context (e.g., K_{CAPIF} and the CAPIF-UE ID) to be provided to the CAPIF function 508.

At 532, the CNF 504 sends the CAPIF registration information, such as the CAPIF function ID, CAPIF address, and the UE ID (e.g., GPSI) to the UE 104 via the AMF 502 (e.g., the security anchor function (SEAF)). The AMF 502 delivers the CAPIF registration information, such as the CAPIF Function ID, address and GPSI to the UE 104 in any protected non-access stratum (NAS) message (such as UE 104 configuration update command, UE 104 parameter update, and so forth).

The CAPIF-UE ID identifies the K_{CAPIF} of the UE 104 and is a temporary user identity of the resource owner. Additionally or alternatively, the CAPIF-UE ID is in network address identifier (NAI) format, e.g., username@realm. The username part can include the routing indicator (RID) of the UE 104 (e.g., the RID can be fetched at 506) and the hash of the K_{CAPIF} can be used as CAPIF-UE ID, and the realm part can include home network (HN) ID. Additionally or alternatively, a serving network name or serving network identifier can be used instead of HN ID, with any AMF 502 (e.g., instead of AUSF) generating and providing the CAPIF security information.

In one or more implementations, the K_{CAPIF} can be derived from K_{AUSF}, K_{AKMA}, or an AMF key (K_{AMF}) as follows using a key derivation function (KDF). A KDF as discussed herein refers to any of a variety of public or proprietary KDFs.

When deriving a K_{CAPIF} from K_{AUSF}, K_{AKMA}, or K_{AMF}, the following one or more parameters can be used to form the input S to the KDF:
- FC = xxxx;
- P0 = "CAPIF";
- L0 = length of " CAPIF"; (e.g., 0x00 0x04)
- P1 = UE ID (e.g., SUPI);
- L1 = length of UE ID (e.g., SUPI).
- P2 = "CAPIF Function ID";
- L2 = length of "CAPIF Function ID"; (e.g., 0x00 0x05)
- P3 = "Network Identifier (Serving/home network information)"; (e.g., Serving network information is used if the AMF 502 does the K_{CAPIF} generation, additionally or alternatively the home network information is used if the AUSF does the K_{CAPIF} generation)
- L3 = length of "Network Identifier"; (e.g., 0x00 0x05)

The input key (KEY) can be K_{AUSF}, K_{AKMA}, K_{AMF}, or K_{CAPIF}. The CAPIF-UE ID can be generated from K_{AUSF} as follows using a KDF.

When deriving the CAPIF-UE ID from K_{AUSF}, K_{AKMA}, or K_{AMF}, the following one or more parameters can be used to form the input S to the KDF:
- FC = xxxx;
- P0 = "CAPIF-UE ID";
- L0 = length of " CAPIF-UE ID"; (e.g., 0x00 0x05)
- P1 = UE ID (e.g., SUPI);
- L1 = length of UE ID (e.g., SUPI);
- P2 = "CAPIF Function ID";
- L2 = length of " CAPIF Function ID"; (e.g., 0x00 0x05)
- P3 = "Network Identifier (Serving/home network information)"; (e.g., Serving network information is used if the AMF 502 does the K_{CAPIF} generation, additionally or alternatively the home network information is used if the AUSF does the K_{CAPIF} generation)
- L3 = length of "Network Identifier"; (e.g., 0x00 0x05)

The procedure 500 provides for generation of a temporary user identity (e.g., a CAPIF-UE ID, a GPSI, or a resource owner ID) that can be used to ensure or preserve confidentiality of the external identity of the UE (e.g., the MSISDN of the UE during the API invocation supported by CAPIF). The procedure 500 further provides for generation of a key (K_{CAPIF}) that can be used to provide a secure session between the resource owner and an AEF, as discussed in more detail below.

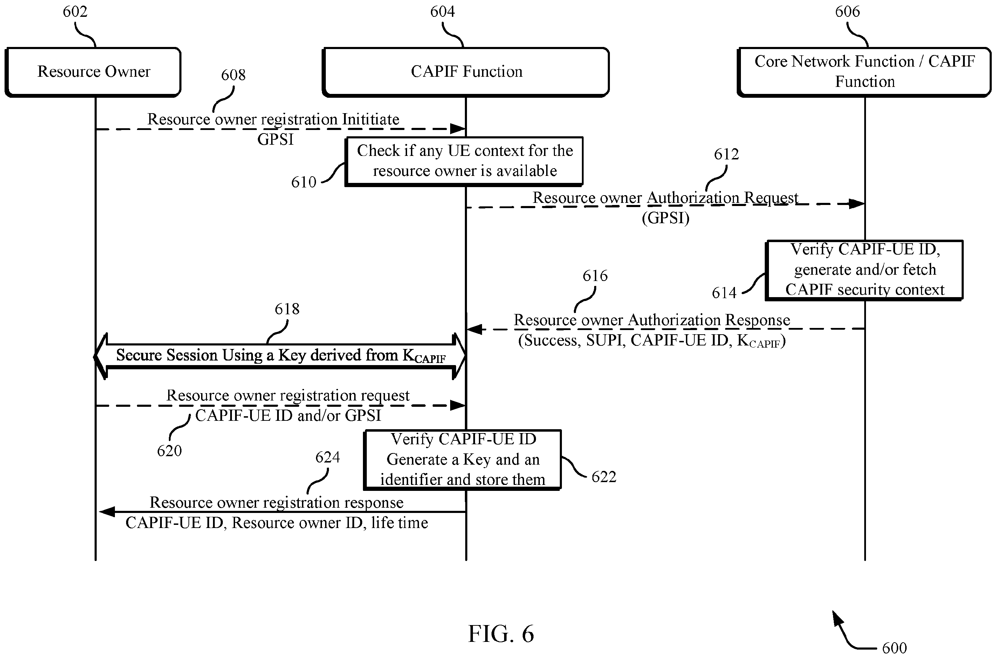

**FIG. 6** illustrates an example resource owner registration procedure 600 that supports resource owner consent information management in accordance with aspects of the present disclosure. The procedure 600 illustrates interaction between various ones of a resource owner 602 (e.g., a UE 104 or a user), a CAPIF function 604, and a core network function (or other CAPIF function) 606. In one or more implementations, the CAPIF function 604 and core network function 606 are included in the core network 106 of FIG. 1.

The procedure 600 describes how the resource owner 602 registers to the CAPIF to manage and control user related service data exposure to application clients or to application servers/functions (that may belong to a third party) that offer service to the user applications (e.g., application clients). The procedure 600 also describes how the resource owner can perform CAPIF authentication and authorization with the CAPIF Function using CAPIF security credentials/context to register with the CAPIF Function. As discussed above, a CAPIF function discussed herein can be any function in the CAPIF framework (e.g., a CCF, an AEF, a resource owner registration function, an API provider domain function, any function that belongs to CAPIF, a core network function (e.g., NEF implementing CAPIF function)). As discussed above, a core network function discussed herein can be an AUSF, an AMF, any NF in the core network 106 of FIG. 1, and so forth.

At 608, the Resource owner 602 sends, to the CAPIF function 604, a Resource owner registration initiate request message with UE ID (e.g., GPSI, any external UE ID or a privacy protected UE ID).

At 610, the CAPIF function 604 checks whether the CAPIF security context (e.g., K_{CAPIF}) associated with the UE ID is locally available. If the security context is available locally, the CAPIF function 604 determines to establishes a secure session with the resource owner 602 using the K_{CAPIF} or a key derived from K_{CAPIF} (e.g., a CAPIF registration key (K_{CAPIF-Reg})) as a pre-shared key. In one or more implementations, K_{CAPIF-Reg} is generated using a KDF, where K_{CAPIF-Reg} = KDF (K_{CAPIF}, Input Parameters: 'UE ID (e.g., GPSI)', 'CAPIF-UE ID', `CAPIF Registration', `Nonce'). For example, the resource owner 602 and the CAPIF function 604 can authenticate and establish a secure session using the K_{CAPIF} or a key derived from K_{CAPIF} (e.g., K_{CAPIF-Reg}) as a pre-shared key (e.g., transport layer security (TLS) pre shared key (PSK)).

In one or more implementations, if the CAPIF function 604 finds the CAPIF security context is available locally, then the CAPIF function 604 need not perform it may not perform the following actions at 612, 614, and 616.

At 612, the CAPIF function 604 sends to the core network function a Resource owner Authorization Request which can include GPSI.

At 614, the core network function 606 based on UE ID (e.g., GPSI) and CAPIF-UE ID association locally stored, fetches the CAPIF security context locally available.

At 616, the core network function 606 sends to the CAPIF function 604 a Resource owner Authorization Response which can include Success, SUPI, CAPIF-UE ID and K_{CAPIF}. Additionally or alternatively, if the CNF 606 could not identify any CAPIF security context for the UE ID (e.g., GPSI) and/or CAPIF-UE ID, then the core network function 606 can send a failure indication in the CAPIF function Resource owner authorization response message. Additionally or alternatively, the core network function 606 can also send to the CAPIF function 604 one or more of the HN ID, the serving network name (SNN), and the serving network identifier (SNID).

At 618, the resource owner 602 and the CAPIF function 604 establish a secure session using the K_{CAPIF} or a key derived from K_{CAPIF} (e.g., K_{CAPIF-Reg}) as a pre-shared key. The resource owner 602 and the CAPIF function 604 can mutually authenticate and establish a secure session using the K_{CAPIF} or a key derived from K_{CAPIF} (e.g., K_{CAPIF-Reg}) as a pre-shared key (e.g., TLS PSK).

Additionally or alternatively, the resource owner CAPIF registration key (e.g., K_{CAPIF-Reg}) can be derived and used by the resource owner 602 and the CAPIF function 604 as follows for secure session establishment (e.g., TLS-PSK). K_{CAPIF-Reg} = KDF (K_{CAPIF}, Input Parameters: 'UE ID (e.g., GPSI)', `CAPIF Registration', 'CAPIF-UE ID' 'Nonce'), where the Nonce is provided by the CAPIF function 604 in a Resource owner registration initiate response message as a pre-requisite before 618.

At 620, the resource owner 602 sends to the CAPIF function 604, a Resource owner registration request with UE ID (e.g., GPSI) and CAPIF-UE ID.

At 622, the CAPIF function 604 checks whether the UE ID (e.g., GPSI) and the CAPIF-UE ID received at 620 is or are the same as in a locally available CAPIF security context. The CAPIF function 604 can verify if the CAPIF-UE ID received from the resource owner 602 matches with the CAPIF-UE ID received from the core network function 606. If the match is successful, the CAPIF function 604 considers the resource owner registration authorization as successful, and generates/assigns a resource owner ID.

The Resource Owner ID can be generated from K_{CAPIF} or K_{CAPIF-Reg} as follows. When deriving the Resource Owner ID from K_{CAPIF} or K_{CAPIF-Reg}, the following one or more parameters can be used to form the input S to the KDF:
- FC = xxxx;
- P0 = " Resource Owner ID";
- L0 = length of "Resource Owner ID";
- P1 = UE ID (e.g., GPSI);
- L1 = length of UE ID (e.g., GPSI);
- P2 = "CAPIF Function ID";
- L2 = length of " CAPIF Function ID";
- P3 = HN ID / SNN;
- L3 = length of HN ID / SNN.
As discussed above, the input key KEY can be K_{CAPIF} or K_{CAPIF-Reg}.

At 624, the CAPIF function sends, to the resource owner 602, a resource owner registration response, which can include CAPIF-UE ID, Resource owner ID and a lifetime. The lifetime parameter can define the validity of the CAPIF registration for the resource owner 602, which can be used to trigger a CAPIF registration renewal or a CAPIF security credential refresh (e.g., refresh of K_{CAPIF} / K_{CAPIF-Reg}). Additionally or alternatively, if the CAPIF function 604 could not identify any CAPIF security context for the UE ID (e.g., GPSI) and/or the CAPIF-UE ID, then the CAPIF function 604 sends a failure indication to the resource owner 602 in the resource owner registration response message.

Accordingly, the procedure 600 provides for CAPIF authentication and authorization for registering a resource owner. The procedure 600 provides for a secure session between the resource owner 602 and the CAPIF function 604 for transmission of the CAPIF-UE ID, assuring the CAPIF function 604 that the resource owner is who it claims to be and keeping the CAPIF-UE ID secured. The resource owner 602 registers to the CAPIF to manage and control user related service data exposure to application servers/functions (that may belong to a third party) that offer service to the user applications (e.g., application clients).

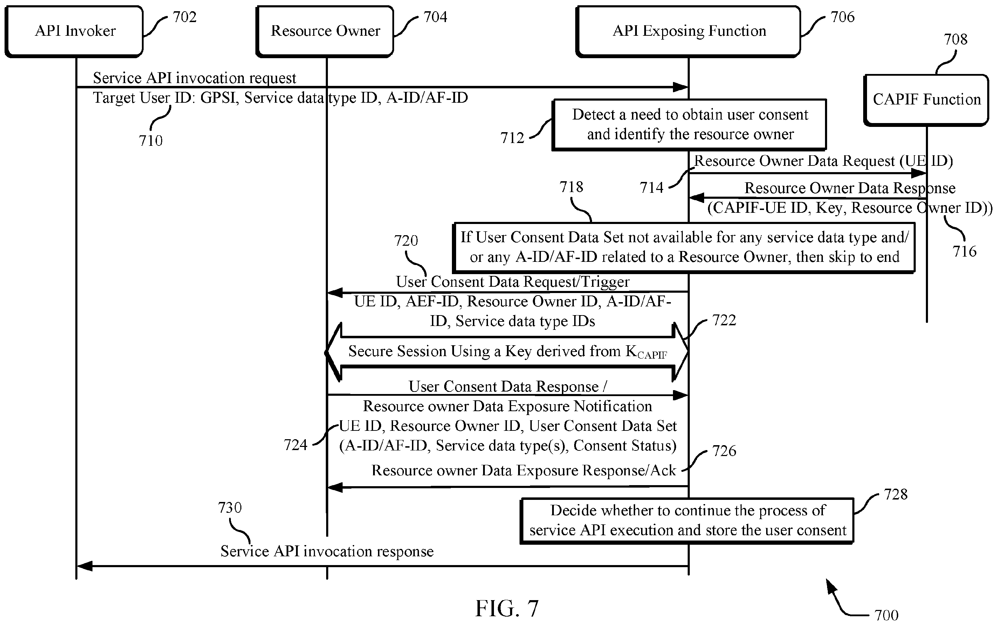

**FIG. 7** illustrates an example user consent collection procedure 700 that supports resource owner consent information management in accordance with aspects of the present disclosure. The procedure 700 illustrates interaction between various ones of an API invoker 702, a resource owner 704 (e.g., a UE 104 or a user), an AEF 706, and a CAPIF function 708. In one or more implementations, the AEF 706 and the CAPIF function 708 are included in the core network 106 of FIG. 1.

The procedure 700 describes how the resource owner 704 registers to the CAPIF to manage and control user related service data exposure to application clients or to application servers/functions (that may belong to a third party) that offer service to the user applications (e.g., application clients). As discussed above, a CAPIF function discussed herein can be any function in the CAPIF framework (e.g., a CCF, an AEF, a resource owner registration function, an API provider domain function, any function that belongs to CAPIF). As discussed above, a core network function discussed herein can be an AUSF, an AMF, any NF in the core network 106 of FIG. 1, and so forth.

The procedure 700 describes how a network (e.g., the core network 106 of FIG. 1 or an API invoker external to the core network 106) can trigger user consent data collection upon service API invocation related to a user application service data. The procedure 700 also describes how a security context can be fetched from the CAPIF function 708 and/or derived at the AEF 706 related to a resource owner 704 to secure the user consent data collection procedure between the resource owner 704 and the AEF 706. As discussed above, a CAPIF function discussed herein can be any function in the CAPIF framework (e.g., a CCF, an AEF, a resource owner registration function, an API provider domain function, any function that belongs to CAPIF). As discussed above, a core network function discussed herein can be an AUSF, an AMF, any NF in the core network 106 of FIG. 1, and so forth.

At 710, the API invoker 702 sends a Service API invocation request to the AEF 706, which requires user consent of the resource owner 704. The Service API Invocation request can include a target User ID or UE ID (e.g., a GPSI, a UE Internet protocol (IP) address, an ethernet address, and external group ID), service data type IDs, and an application ID (A-ID) or an application function (AF) ID (AF-ID). The A-ID or AF-ID denotes one or more of the application client, server, function, servers identifiers, and so forth that the API invoker 702 is invoking (and for which user consent may need to be provided). The AEF 706 maintains service data type IDs, exposure restriction information, and resource owner information (if available).

At 712, the AEF 706 determines if resource owner consent is required to execute the service API. If resource owner consent is not required for the API invocation, the actions at 714-728 are skipped as there is no need to obtain resource owner consent. Rather, the AEF 706 jumps to 730 and sends a Service API invocation response to the API invoker indicating the Service API invocation response indicating the Service API invocation request is granted or allowed.

Additionally or alternatively, the AEF 706 can, at any time, fetch the resource owner information corresponding to the target user, UE ID (e.g., GPSI or any other) from the local storage (if available) or from the CAPIF function 708 (or from the UDM or UDR) by following the actions at 714 and 716. At 714, the AEF 706 sends a resource owner data request to the CAPIF function 708, which can include a UE ID (e.g., a GPSI or any UE ID).

At 716, the CAPIF function 708 sends a resource owner data response to the AEF 706, which can include a CAPIF-UE ID, resource owner identity and a key (e.g., related to the resource owner). In one or more implementations, the key is a CAPIF-AEF key (K_{CAPIF-AEF}), which may also be referred to as a CAPIF-resource owner key (K_{CAPIF-RO}) or a CAPIF-user key (K_{CAPIF-User}), derived from K_{CAPIF} or K_{CAPIF-Reg} as discussed in more detail below. Additionally or alternatively, the key is a K_{CAPIF} or a K_{CAPIF-Reg} as discussed above).

At 718, if a user consent data set is not available for any service data type and/or any A-ID or AF-ID related to the resource owner 704, then the actions at 720-726 are followed. The user consent data set refers to a set of user consent data (e.g., consent status (e.g., accept or allowed/denied or not allowed/revoke/update) for any service data type, AID, or AF-ID related to the resource owner 704) available to the AEF 706. However, if a user consent data set is available for any service data type and/or any A-ID or AF-ID related to the resource owner 704, then the procedure 700 jumps to 728. Additionally or alternatively, user consent data can be fetched by the AEF 706 from local storage, from the CAPIF function 708, from any storage functionality, from a core network function, and so forth.

At 720, the AEF 706 can send, to the resource owner 704, a User Consent Data Request/Trigger which can include AEF-ID, target UE ID (e.g., GPSI or any other), resource owner ID (can be optionally skipped if the resource owner ID is to be confidential), A-ID or AF-ID, and service data set type IDs. The A-ID or AF-ID denotes the application client, server, function, servers, and so forth identifiers for which the data trigger is related or required (e.g., for which the user consent data need to be provided).

If the AEF 706 does not have any security context for the resource owner (e.g., if the CAPIF function 708 provides K_{CAPIF} or K_{CAPIF-Reg} at 716 above), then the AEF 706 derives K_{CAPIF- AEF} (as discussed above, alternatively this can be termed as K_{CAPIF-RO} or K_{CAPIF-User}) from K_{CAPIF} or K_{CAPIF-Reg}, as follows. When deriving the K_{CAPIF- AEF} (or K_{CAPIF-RO} or K_{CAPIF-User}) from K_{CAPIF} or K_{CAPIF-Reg}, the following one or more parameters can be used to form the input S to the KDF:
- FC = xxxx;
- P0 = "Resource owner ID";
- L0 = length of "Resource Owner ID";
- P1 = UE ID (e.g., GPSI);
- L1 = length of UE ID (e.g., GPSI);
- P2 = "Freshness parameter"; (e.g., Counter/random number/nonce)
- L2 = length of "Freshness parameter";
- P3 = Application ID(s), / Application Function ID(s);
- L3 = length of Application ID(s), / Application Function ID(s).
- P4 = CAPIF Function ID / AEF ID;
- L4= CAPIF Function ID / AEF ID.

As discussed above, the input key KEY to the KDF can be K_{CAPIF} / K_{CAPIF-Reg}. The K_{CAPIF} can be a key that is established between the resource owner 704 and a CNF (e.g., AUSF, AMF or any NF), such as in procedure 500 of FIG. 5 discussed above. The K_{CAPIF-Reg} can be a key that is established between the resource owner 704 and the CAPIF function during a resource owner registration, onboarding, or enrolment process, such as in procedure 600 of FIG. 6 discussed above, where the CAPIF function can be any function in the CAPIF framework.

Additionally or alternatively, if the CAPIF function 708 provides at 716 the K_{CAPIF- AEF} (alternatively can be termed as K_{CAPIF-RO} or K_{CAPIF-User}) derived from K_{CAPIF} or K_{CAPIF-Reg}, then K_{CAPIF- AEF} can be derived only in case of a key refresh because the AEF 706 will be provided with a resource owner key by the CAPIF function 708.

At 722, the resource owner 704, in response to receiving the User Consent Data Request/Trigger, generates a K_{CAPIF-AEF} from K_{CAPIF} or K_{CAPIF-Reg}. The resource owner 704 generates a K_{CAPIF-AEF} analogous to the manner in which the AEF 706 generates a K_{CAPIF-AEF} as discussed above. Additionally, the AEF 706 and the resource owner 704 establish a secure session or connection set up based on K_{CAPIF-AEF} as the pre-shared key (e.g., TLS-PSK). Additionally or alternatively, the secure session or connection is established between the CAPIF function 708 and the resource owner 704.

At 724, the resource owner 704 sends, to the AEF 706, a User Consent Data Response / Resource owner Data Exposure Notification message which can include a UE ID (e.g., a GPSI or any other identifier, a resource owner ID, and a user consent data set (A-ID or AF-ID, service data type(s), consent status (accept or allowed/denied or not allowed/revoke/update)).

At 726, the AEF 706 can store the received user consent data set for the resource owner along with the UE ID (e.g., GPSI), resource owner ID and other information locally or in the UDM, UDR, or an unstructured data storage function (UDSF).

At 728, if the API invocation is allowed based on the user consent data set (e.g., the user consent data set received at 726 or otherwise available to the AEF 706 (e.g., locally stored)), the process for service API execution is continued. If the API invocation is denied, the service API execution is rejected. The result of the user consent response is stored in the AEF 706. In one or more implementations, the AEF 706 subscribes for notification service to CNF (e.g., AMF, AUSF, UDM, UDR), where if any UE or resource owner is deregistered from the network, then a related notification is sent from the CNF to the CAPIF Function 708 and/or the AEF 706, with a SUPI or GPSI and a de-registered notification. In response to a de-registered notification, the CAPIF Function 708 and the AEF 706 delete all resource owner data and user consent data for the deregistered UE or resource owner.

At 730, the AEF 706 sends a service API invocation response to the API invoker 702 based on the result of the service API execution (e.g., that the invocation request is allowed or denied).

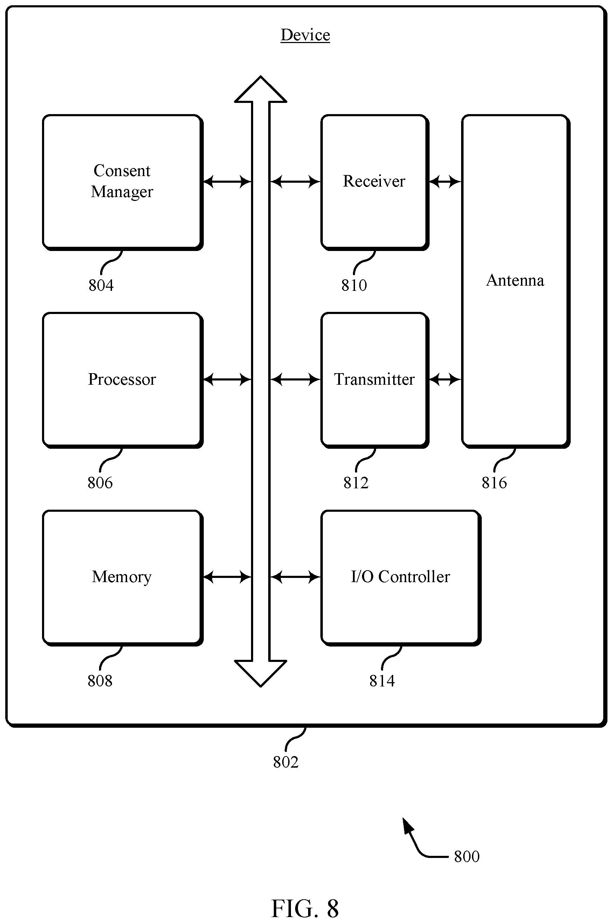

**FIG. 8** illustrates an example of a block diagram 800 of a device 802 that supports resource owner consent information management in accordance with aspects of the present disclosure. The device 802 may be an example of a UE 104 as described herein. The device 802 may support wireless communication and/or network signaling with one or more base stations 102, other UEs 104, or any combination thereof. The device 802 may include components for bi-directional communications including components for transmitting and receiving communications, such as a consent manager 804, a processor 806, a memory 808, a receiver 810, a transmitter 812, and an I/O controller 814. These components may be in electronic communication or otherwise coupled (e.g., operatively, communicatively, functionally, electronically, electrically) via one or more interfaces (e.g., buses).

The consent manager 804, the receiver 810, the transmitter 812, or various combinations thereof or various components thereof may be examples of means for performing various aspects of the present disclosure as described herein. For example, the consent manager 804, the receiver 810, the transmitter 812, or various combinations or components thereof may support a method for performing one or more of the functions described herein.

In some implementations, the consent manager 804, the receiver 810, the transmitter 812, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 806 and the memory 808 coupled with the processor 806 may be configured to perform one or more of the functions described herein (e.g., by executing, by the processor 806, instructions stored in the memory 808).

Additionally or alternatively, in some implementations, the consent manager 804, the receiver 810, the transmitter 812, or various combinations or components thereof may be implemented in code (e.g., as communications management software or firmware) executed by the processor 806. If implemented in code executed by the processor 806, the functions of the consent manager 804, the receiver 810, the transmitter 812, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the consent manager 804 may be configured to perform various operations (e.g., receiving, monitoring, transmitting) using or otherwise in cooperation with the receiver 810, the transmitter 812, or both. For example, the consent manager 804 may receive information from the receiver 810, send information to the transmitter 812, or be integrated in combination with the receiver 810, the transmitter 812, or both to receive information, transmit information, or perform various other operations as described herein. Although the consent manager 804 is illustrated as a separate component, in some implementations, one or more functions described with reference to the consent manager 804 may be supported by or performed by the processor 806, the memory 808, or any combination thereof. For example, the memory 808 may store code, which may include instructions executable by the processor 806 to cause the device 802 to perform various aspects of the present disclosure as described herein, or the processor 806 and the memory 808 may be otherwise configured to perform or support such operations.

For example, the consent manager 804 may support wireless communication and/or network signaling at a device (e.g., the device 802, a UE) in accordance with examples as disclosed herein. The consent manager 804 and/or other device components may be configured as or otherwise support an apparatus, such as a UE, including a transceiver; and a processor coupled to the transceiver, the processor and the transceiver configured to cause the apparatus to: transmit, to a common application programming interface framework function in a core network, a request to initiate resource owner registration for the apparatus, the request including an identifier of the apparatus; establish, using a shared key based on the common application programming interface framework key, a secure session with the common application programming interface framework function; transmit, to the common application programming interface framework function using the secure session, a resource owner registration request including a common application programming interface framework-user equipment identifier; and receive, from the common application programming interface framework function using the secure session, a resource owner registration response including a resource owner identifier if the received common application programming interface framework-user equipment identifier is the same as a core network stored common application programming interface framework-user equipment identifier for the user equipment or a failure indication if the common application programming interface framework-user equipment identifier is not the same as the core network stored common application programming interface framework-user equipment identifier for the user equipment.

Additionally, the apparatus (e.g., a UE) includes any one or combination of: where the shared key is the common application programming interface framework key; where the processor is further configured to cause the apparatus to derive the shared key from the common application programming interface framework key using as input parameters one or more of: the user equipment identifier, a common application programming interface framework registration key word, and a nonce included in the request to initiate resource owner registration; where the resource owner registration response includes a failure indication if there is no core network stored common application programming interface framework-user equipment identifier for the user equipment; where the resource owner identifier is derived from the shared key using as input parameters one or more of: a user equipment identifier, a common application programming interface framework function identifier, a home network identifier, and a length of each of the one or more input parameters; where the resource owner registration response further includes a lifetime parameter indicating a duration of validity of the resource owner identifier.

Additionally or alternatively, the consent manager 804 and/or other device components may be configured as or otherwise support an apparatus, such as a UE, including a transceiver; and a processor coupled to the transceiver, the processor and the transceiver configured to cause the apparatus to: receive, from an application programming interface exposing function, a request message that includes one or more of: an application programming interface exposing function identifier, a target user equipment identifier, an application/function identifier, and service data set type identifiers; establish, using an application programming interface exposing function key, a secure connection with the application programming interface exposing function; and transmit, to the application programming interface exposing function via the secure connection, a response message that includes one or more of: a user equipment identifier and a user consent data set.

Additionally, the apparatus (e.g., a UE) includes any one or combination of: where the request message further includes a resource owner identifier; where the user consent data set includes one or more of: an application/function identifier, one or more service data types, and a consent status; where the consent status is indicated as one of: accept or allowed, denied or not allowed, revoked/updated; where the processor and the transceiver are further configured to cause the apparatus to derive the application programming interface exposing function key from a resource owner key and using as input parameters one or more of: a resource owner identifier, a user equipment identifier, a freshness parameter, application/function identifiers, a common application programming interface framework function identifier or application programming interface exposing function identifier, and a length of each input parameter; where the application programming interface exposing function key comprises a common application programming interface framework key.

The consent manager 804 and/or other device components may be configured as or otherwise support a means for wireless communication and/or network signaling at a UE, including transmitting, to a common application programming interface framework function in a core network, a request to initiate resource owner registration for the user equipment, the request including an identifier of the user equipment; establishing, using a shared key based on the common application programming interface framework key, a secure session with the common application programming interface framework function; transmitting, to the common application programming interface framework function using the secure session, a resource owner registration request including a common application programming interface framework-user equipment identifier; and receiving, from the common application programming interface framework function using the secure session, a resource owner registration response including a resource owner identifier if the received common application programming interface framework-user equipment identifier is the same as a core network stored common application programming interface framework-user equipment identifier for the user equipment or a failure indication if the common application programming interface framework-user equipment identifier is not the same as the core network stored common application programming interface framework-user equipment identifier for the user equipment.

Additionally, wireless communication at the UE includes any one or combination of: where the shared key is the common application programming interface framework key; further including deriving the shared key from the common application programming interface framework key using as input parameters one or more of: the user equipment identifier, a common application programming interface framework registration key word, and a nonce included in the request to initiate resource owner registration; where the resource owner registration response includes a failure indication if there is no core network stored common application programming interface framework-user equipment identifier for the user equipment; further including deriving the resource owner identifier from the shared key using as input parameters one or more of: a user equipment identifier, a common application programming interface framework function identifier, a home network identifier, and a length of each of the one or more input parameters; where the resource owner registration response further includes a lifetime parameter indicating a duration of validity of the resource owner identifier.

The consent manager 804 and/or other device components may be configured as or otherwise support a means for wireless communication and/or network signaling at a UE, including receiving, from an application programming interface exposing function, a request message that includes one or more of: an application programming interface exposing function identifier, a target user equipment identifier, an application/function identifier, and service data set type identifiers; establishing, using an application programming interface exposing function key, a secure connection with the application programming interface exposing function; and transmitting, to the application programming interface exposing function via the secure connection, a response message that includes one or more of: a user equipment identifier and a user consent data set.

Additionally, wireless communication at the UE includes any one or combination of: where the request message further includes a resource owner identifier; where the user consent data set includes one or more of: an application/function identifier, one or more service data types, and a consent status; where the consent status is indicated as one of: accept or allowed, denied or not allowed, revoked/updated; further including deriving the application programming interface exposing function key from a resource owner key and using as input parameters one or more of: a resource owner identifier, a user equipment identifier, a freshness parameter, application/function identifiers, a common application programming interface framework function identifier or application programming interface exposing function identifier, and a length of each input parameter; the application programming interface exposing function key comprises a common application programming interface framework key.

The processor 806 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 806 may be configured to operate a memory array using a memory controller. In some other implementations, a memory controller may be integrated into the processor 806. The processor 806 may be configured to execute computer-readable instructions stored in a memory (e.g., the memory 808) to cause the device 802 to perform various functions of the present disclosure.

The memory 808 may include random access memory (RAM) and read-only memory (ROM). The memory 808 may store computer-readable, computer-executable code including instructions that, when executed by the processor 806 cause the device 802 to perform various functions described herein. The code may be stored in a non-transitory computer-readable medium such as system memory or another type of memory. In some implementations, the code may not be directly executable by the processor 806 but may cause a computer (e.g., when compiled and executed) to perform functions described herein. In some implementations, the memory 808 may include, among other things, a basic I/O system (BIOS) which may control basic hardware or software operation such as the interaction with peripheral components or devices.

The I/O controller 814 may manage input and output signals for the device 802. The I/O controller 814 may also manage peripherals not integrated into the device 802. In some implementations, the I/O controller 814 may represent a physical connection or port to an external peripheral. In some implementations, the I/O controller 814 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 814 may be implemented as part of a processor, such as the processor 806. In some implementations, a user may interact with the device 802 via the I/O controller 814 or via hardware components controlled by the I/O controller 814.

In some implementations, the device 802 may include a single antenna 816. However, in some other implementations, the device 802 may have more than one antenna 816, which may be capable of concurrently transmitting or receiving multiple wireless transmissions. The receiver 810 and the transmitter 812 may communicate bi-directionally, via the one or more antennas 816, wired, or wireless links as described herein. For example, the receiver 810 and the transmitter 812 may represent a wireless transceiver and may communicate bi-directionally with another wireless transceiver. The transceiver may also include a modem to modulate the packets, to provide the modulated packets to one or more antennas 816 for transmission, and to demodulate packets received from the one or more antennas 816.

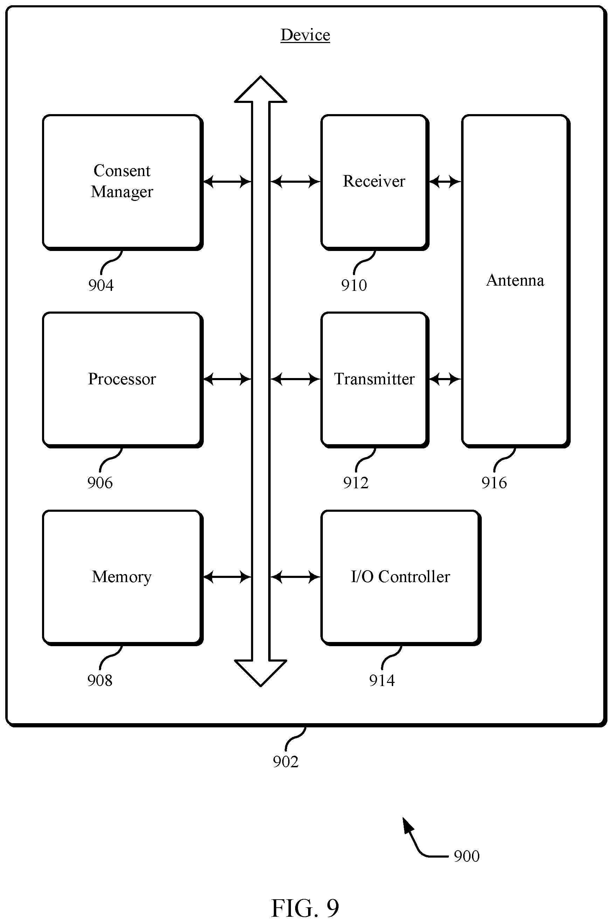

**FIG. 9** illustrates an example of a block diagram 900 of a device 902 that supports resource owner consent information management in accordance with aspects of the present disclosure. The device 902 may be an example of a device implementing a function in a core network, such as core network 106 as described herein. The device 902 may support wireless communication and/or network signaling with one or more base stations 102, other UEs 104, or any combination thereof. The device 902 may include components for bi-directional communications including components for transmitting and receiving communications, such as a consent manager 904, a processor 906, a memory 908, a receiver 910, a transmitter 912, and an I/O controller 914. These components may be in electronic communication or otherwise coupled (e.g., operatively, communicatively, functionally, electronically, electrically) via one or more interfaces (e.g., buses).

The consent manager 904, the receiver 910, the transmitter 912, or various combinations thereof or various components thereof may be examples of means for performing various aspects of the present disclosure as described herein. For example, the consent manager 904, the receiver 910, the transmitter 912, or various combinations or components thereof may support a method for performing one or more of the functions described herein.

In some implementations, the consent manager 904, the receiver 910, the transmitter 912, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor 906 and the memory 908 coupled with the processor 906 may be configured to perform one or more of the functions described herein (e.g., by executing, by the processor 906, instructions stored in the memory 908).

Additionally or alternatively, in some implementations, the consent manager 904, the receiver 910, the transmitter 912, or various combinations or components thereof may be implemented in code (e.g., as communications management software or firmware) executed by the processor 906. If implemented in code executed by the processor 906, the functions of the consent manager 904, the receiver 910, the transmitter 912, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the consent manager 904 may be configured to perform various operations (e.g., receiving, monitoring, transmitting) using or otherwise in cooperation with the receiver 910, the transmitter 912, or both. For example, the consent manager 904 may receive information from the receiver 910, send information to the transmitter 912, or be integrated in combination with the receiver 910, the transmitter 912, or both to receive information, transmit information, or perform various other operations as described herein. Although the consent manager 904 is illustrated as a separate component, in some implementations, one or more functions described with reference to the consent manager 904 may be supported by or performed by the processor 906, the memory 908, or any combination thereof. For example, the memory 908 may store code, which may include instructions executable by the processor 906 to cause the device 902 to perform various aspects of the present disclosure as described herein, or the processor 906 and the memory 908 may be otherwise configured to perform or support such operations.

For example, the consent manager 904 may support wireless communication and/or network signaling at a device (e.g., the device 902) in accordance with examples as disclosed herein. The consent manager 904 and/or other device components may be configured as or otherwise support an apparatus, such as an apparatus in the core network 106, including a transceiver; and a processor coupled to the transceiver, the processor and the transceiver configured to cause the apparatus to: transmit, to a unified data management, an authentication request for a user equipment; receive, from the unified data management, an authentication response including an indication; derive, in response to receiving the indication, common application programming interface framework security information; and store the common application programming interface framework security information as a user equipment context along with an identifier of the user equipment.

Additionally, the apparatus (e.g., an apparatus in the core network 106) includes any one or combination of: the authentication response further including one or more of a common application programming interface framework function identifier, a common application programming interface framework function address, a generic public subscription identifier, and a user equipment identifier; where the common application programming interface framework security information comprises one or more of a common application programming interface framework-user equipment identifier and a common application programming interface framework key; where the processor is further configured to cause the apparatus to derive the common application programming interface framework key from an authentication server function key or an authentication and key management for application key, and using as input parameters one or more of: a common application programming interface framework key word, a user equipment identifier, a common application programming interface framework function identifier, a serving network identifier, a home network identifier, and a length of each of the one or more input parameters; where the processor is further configured to cause the apparatus to derive the common application programming interface framework-user equipment identifier from the common application programming interface framework key or an authentication server function key or an authentication and key management for application key and using as input parameters one or more of: a common application programming interface framework-user equipment identifier key word, a user equipment identifier, a common application programming interface framework function identifier, a serving network identifier, a home network identifier, and a length of each of the one or more input parameters; where the processor and the transceiver are further configured to cause the apparatus to transmit, to a user equipment via an intermediate access and mobility management function, a common application programming interface framework registration related information that includes one or more of: a common application programming interface framework function identifier, a common application programming interface framework function address, a generic public subscription identifier, and a common application programming interface framework-user equipment identifier.

Additionally or alternatively, the consent manager 904 and/or other device components may be configured as or otherwise support an apparatus, such as an apparatus in the core network 106, including a transceiver; and a processor coupled to the transceiver, the processor and the transceiver configured to cause the apparatus to: receive, from a user equipment, a request to initiate resource owner registration for the user equipment, the request including an identifier of the user equipment; identify or retrieve, in response to the request, a common application programming interface framework key associated with the user equipment identifier; establish, using a shared key based on the common application programming interface framework key, a secure session with the user equipment; receive, from the user equipment via the secure session, a resource owner registration request including a common application programming interface framework-user equipment identifier; verify, in response to the resource owner registration request, whether the common application programming interface framework-user equipment identifier is the same as a locally stored common application programming interface framework-user equipment identifier for the user equipment; and return, to the user equipment via the secure session, a resource owner registration response including a resource owner identifier if the received common application programming interface framework-user equipment identifier is the same as the locally stored common application programming interface framework-user equipment identifier for the user equipment or a failure indication if the common application programming interface framework-user equipment identifier is not the same as the locally stored common application programming interface framework-user equipment identifier for the user equipment.

Additionally, the apparatus (e.g., an apparatus in the core network 106) includes any one or combination of: where the shared key is the common application programming interface framework key; where the processor is further configured to cause the apparatus to derive the shared key from the common application programming interface framework key using as input parameters one or more of: the user equipment identifier, the common application programming interface framework-user equipment identifier, a common application programming interface framework registration key word, a common application programming interface framework function identifier, a random number, and a nonce included in the request to initiate resource owner registration; where the resource owner registration response includes a failure indication if there is no common application programming interface framework-user equipment identifier available for the user equipment; where the processor is further configured to cause the apparatus to derive the resource owner identifier from the shared key using as input parameters one or more of: the resource owner identifier, a user equipment identifier, a common application programming interface framework function identifier, a serving network identifier, an home network identifier, and a length of each of the one or more input parameters; where the resource owner registration response further includes a lifetime parameter indicating a duration of validity of the resource owner identifier.

Additionally or alternatively, the consent manager 904 and/or other device components may be configured as or otherwise support an apparatus, such as an apparatus in the core network 106, including a transceiver; and a processor coupled to the transceiver, the processor and the transceiver configured to cause the apparatus to: receive, from an API invoker, a first request message; fetch, in response to the first request message, resource owner data and a resource owner key from a common application programming interface framework function; derive an application programming interface exposing function key based on the resource owner key; transmit, to the resource owner, a second request message that includes one or more of: an application programming interface exposing function identifier, a target user equipment identifier, an application/function identifier, and service data set type identifiers; establish, using the application programming interface exposing function key, a secure connection with the resource owner; receive, from the resource owner via the secure connection, a second response message that includes one or more of: a user equipment identifier and a user consent data set; and store the user consent data set along with user equipment identifier.

Additionally, the apparatus (e.g., an apparatus in the core network 106) includes any one or combination of: where the second request message further includes a resource owner identifier; where the user consent data set includes one or more of: an application/function identifier, one or more service data types, and a consent status; where the consent status is indicated as one of: accept or allowed, denied or not allowed, revoked/updated; where the processor and the transceiver are further configured to cause the apparatus to transmit, to the API invoker, a third response message based on the consent status; where the processor and the transceiver are further configured to cause the apparatus to derive the application programming interface exposing function key from the resource owner key and using as input parameters one or more of: a resource owner identifier, a user equipment identifier, a freshness parameter, application/function identifiers, a common application programming interface framework function identifier or application programming interface exposing function identifier, and a length of each input parameter; where the freshness parameter comprises one or more of a counter, a random number, and a nonce; where the application programming interface exposing function key comprises a common application programming interface framework key.

Additionally or alternatively, the consent manager 904 and/or other device components may be configured as or otherwise support an apparatus, such as an apparatus in the core network 106, including a transceiver; and a processor coupled to the transceiver, the processor and the transceiver configured to cause the apparatus to: receive, from a core network function, an authentication request for a user equipment; retrieve, in response to the authentication request, subscription credentials for the user equipment; and transmit, to the core network function, an authentication response including the subscription credentials and an indication that the core network function is to generate a common application programming interface framework key.

Additionally, the apparatus (e.g., an apparatus in the core network 106) includes any one or combination of: the authentication response further including a common application programming interface framework function identifier; the authentication response further including a common application programming interface framework function address; the authentication response further including and a user equipment identifier.

The consent manager 904 and/or other device components may be configured as or otherwise support a means for wireless communication at a device, including transmitting, to a unified data management, an authentication request for a user equipment; receiving, from the unified data management, an authentication response including an indication; deriving, in response to receiving the indication, common application programming interface framework security information; and storing the common application programming interface framework Security information as a user equipment context along with an identifier of the user equipment.

Additionally, wireless communication at the UE includes any one or combination of: the authentication response further including one or more of a common application programming interface framework function identifier, a common application programming interface framework function address, a generic public subscription identifier, and a user equipment identifier; where the common application programming interface framework security information comprises a common application programming interface framework-user equipment identifier; where the common application programming interface framework security information comprises a common application programming interface framework key; the deriving including deriving the common application programming interface framework key from an authentication server function key or an authentication and key management for application key, and using as input parameters one or more of: a common application programming interface framework key word, a user equipment identifier, a common application programming interface framework function identifier, a serving network identifier, a home network identifier, and a length of each of the one or more input parameters; the deriving including deriving the common application programming interface framework-user equipment identifier from the common application programming interface framework key and using as input parameters one or more of: a common application programming interface framework-user equipment identifier key word, a user equipment identifier, subscription identifier, a common application programming interface framework function identifier, a serving network identifier, a home network identifier, and a length of each of the one or more input parameters; further including transmitting, to a user equipment via an intermediate access and mobility management function, a common application programming interface framework registration related information that includes one or more of: a common application programming interface framework function identifier, a common application programming interface framework function address, a generic public subscription identifier, and a common application programming interface framework-user equipment identifier.

Additionally or alternatively, the consent manager 904 and/or other device components may be configured as or otherwise support a means for wireless communication at a device, including receiving, from a core network function, an authentication request for a user equipment; retrieving, in response to the authentication request, subscription credentials for the user equipment; and transmitting, to the core network function, an authentication response including the subscription credentials and an indication that the core network function is to generate a common application programming interface framework key.

Additionally, wireless communication at the UE includes any one or combination of: the authentication response further including a common application programming interface framework function identifier; the authentication response further including a common application programming interface framework function address; the authentication response further including and a user equipment identifier.

Additionally or alternatively, the consent manager 904 and/or other device components may be configured as or otherwise support a means for wireless communication at a device, including receiving, from a user equipment, a request to initiate resource owner registration for the user equipment, the request including an identifier of the user equipment; identifying or retrieving, in response to the request, a common application programming interface framework key associated with the user equipment identifier; establishing, using a shared key based on the common application programming interface framework key, a secure session with the user equipment; receiving, from the user equipment via the secure session, a resource owner registration request including a common application programming interface framework-user equipment identifier; verifying, in response to the resource owner registration request, whether the common application programming interface framework-user equipment identifier is the same as a locally stored common application programming interface framework-user equipment identifier for the user equipment; and returning, to the user equipment via the secure session, a resource owner registration response including a resource owner identifier if the received common application programming interface framework-user equipment identifier is the same as the locally stored common application programming interface framework-user equipment identifier for the user equipment or a failure indication if the common application programming interface framework-user equipment identifier is not the same as the locally stored common application programming interface framework-user equipment identifier for the user equipment.

Additionally, wireless communication at the UE includes any one or combination of: where the shared key is the common application programming interface framework key; further including deriving the shared key from the common application programming interface framework key using as input parameters one or more of: the user equipment identifier, the common application programming interface framework-user equipment identifier, a common application programming interface framework registration key word, a common application programming interface framework function identifier, random number, and a nonce included in the request to initiate resource owner registration; including, in the resource owner registration response, a failure indication if there is no common application programming interface framework-user equipment identifier available for the user equipment; further including deriving the resource owner identifier from the shared key using as input parameters one or more of: the resource owner identifier, a user equipment identifier, a common application programming interface framework function identifier, a serving network identifier, a home network identifier, and a length of each of the one or more input parameters; including, in the resource owner registration response, a lifetime parameter indicating a duration of validity of the resource owner identifier.

Additionally or alternatively, the consent manager 904 and/or other device components may be configured as or otherwise support a means for wireless communication at a device, including receiving, from an API invoker, a first request message; fetching, in response to the first request message, resource owner data and a resource owner key from a common application programming interface framework function; deriving an application programming interface exposing function key based on the resource owner key; transmitting, to the resource owner, a second request message that includes one or more of: an application programming interface exposing function identifier, a target user equipment identifier, an application/function identifier, and service data set type identifiers; establishing, using the application programming interface exposing function key, a secure connection with the resource owner; receiving, from the resource owner via the secure connection, a second response message that includes one or more of: a user equipment identifier and a user consent data set; and storing the user consent data set along with user equipment identifier.

Additionally, wireless communication at the UE includes any one or combination of: where the second request message further includes a resource owner identifier; where the user consent data set includes one or more of: an application/function identifier, one or more service data types, and a consent status; where the consent status is indicated as one of: accept or allowed, denied or not allowed, revoked/updated; further including transmitting, to the API invoker, a third response message based on the consent status; where deriving the application programming interface exposing function key comprises deriving the application programming interface exposing function key from the resource owner key and using as input parameters one or more of: a resource owner identifier, a user equipment identifier, a freshness parameter, application/function identifiers, a common application programming interface framework function identifier or application programming interface exposing function identifier, and a length of each input parameter; where the application programming interface exposing function key comprises a common application programming interface framework key.

The processor 906 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor 906 may be configured to operate a memory array using a memory controller. In some other implementations, a memory controller may be integrated into the processor 906. The processor 906 may be configured to execute computer-readable instructions stored in a memory (e.g., the memory 908) to cause the device 902 to perform various functions of the present disclosure.

The memory 908 may include random access memory (RAM) and read-only memory (ROM). The memory 908 may store computer-readable, computer-executable code including instructions that, when executed by the processor 906 cause the device 902 to perform various functions described herein. The code may be stored in a non-transitory computer-readable medium such as system memory or another type of memory. In some implementations, the code may not be directly executable by the processor 906 but may cause a computer (e.g., when compiled and executed) to perform functions described herein. In some implementations, the memory 908 may include, among other things, a basic I/O system (BIOS) which may control basic hardware or software operation such as the interaction with peripheral components or devices.

The I/O controller 914 may manage input and output signals for the device 902. The I/O controller 914 may also manage peripherals not integrated into the device 902. In some implementations, the I/O controller 914 may represent a physical connection or port to an external peripheral. In some implementations, the I/O controller 914 may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller 914 may be implemented as part of a processor, such as the processor 906. In some implementations, a user may interact with the device 902 via the I/O controller 914 or via hardware components controlled by the I/O controller 914.

In some implementations, the device 902 may include a single antenna 916. However, in some other implementations, the device 902 may have more than one antenna 916, which may be capable of concurrently transmitting or receiving multiple wireless transmissions. The receiver 910 and the transmitter 912 may communicate bi-directionally, via the one or more antennas 916, wired, or wireless links as described herein. For example, the receiver 910 and the transmitter 912 may represent a wireless transceiver and may communicate bi-directionally with another wireless transceiver. The transceiver may also include a modem to modulate the packets, to provide the modulated packets to one or more antennas 916 for transmission, and to demodulate packets received from the one or more antennas 916.

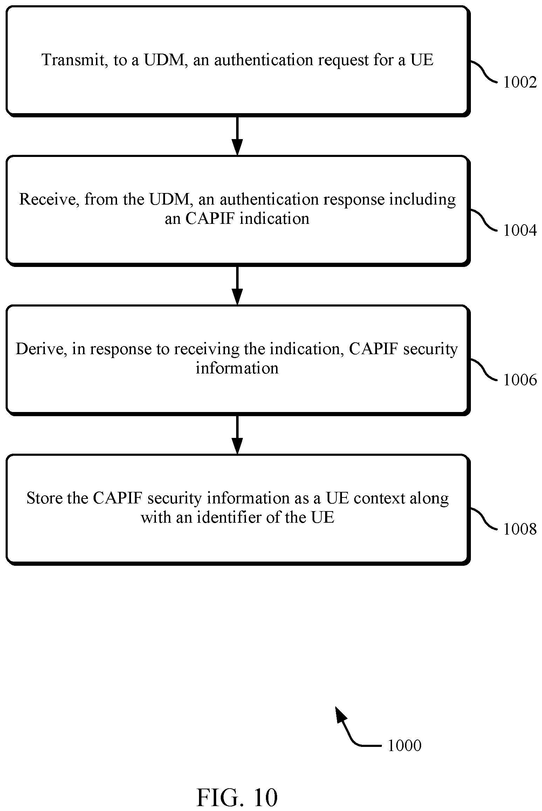

**FIG. 10** illustrates a flowchart of a method 1000 that supports resource owner consent information management in accordance with aspects of the present disclosure. The operations of the method 1000 may be implemented by a device or its components as described herein. For example, the operations of the method 1000 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1002, the method may include transmitting, to a UDM, an authentication request for a UE. The operations of 1002 may be performed in accordance with examples as described herein. In some implementations, aspects of the operations of 1002 may be performed by a device as described with reference to FIG. 1.

At 1004, the method may include receiving, from the UDM, an authentication response including an CAPIF indication. The operations of 1004 may be performed in accordance with examples as described herein. In some implementations, aspects of the operations of 1004 may be performed by a device as described with reference to FIG. 1.

At 1006, the method may include deriving, in response to receiving the indication, CAPIF security information. The operations of 1006 may be performed in accordance with examples as described herein. In some implementations, aspects of the operations of 1006 may be performed by a device as described with reference to FIG. 1.

At 1008, the method may include storing the CAPIF security information as a UE context along with an identifier of the UE. The operations of 1008 may be performed in accordance with examples as described herein. In some implementations, aspects of the operations of 1008 may be performed by a device as described with reference to FIG. 1.

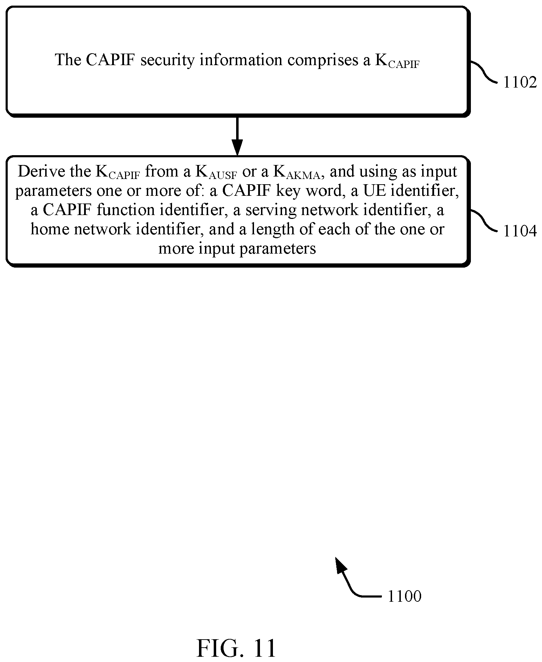

**FIG. 11** illustrates a flowchart of a method 1100 that supports resource owner consent information management in accordance with aspects of the present disclosure. The operations of the method 1100 may be implemented by a device or its components as described herein. For example, the operations of the method 1100 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1102, the method may include the CAPIF security information comprising a K_{CAPIF}. The operations of 1102 may be performed in accordance with examples as described herein. In some implementations, aspects of the operations of 1102 may be performed by a device as described with reference to FIG. 1.

At 1104, the method may include deriving the K_{CAPIF} from a K_{AUSF} or a K_{AKMA}, and using as input parameters one or more of: a CAPIF key word, a UE identifier, a CAPIF function identifier, a serving network identifier, a home network identifier, and a length of each of the one or more input parameters. The operations of 1104 may be performed in accordance with examples as described herein. In some implementations, aspects of the operations of 1104 may be performed by a device as described with reference to FIG. 1.

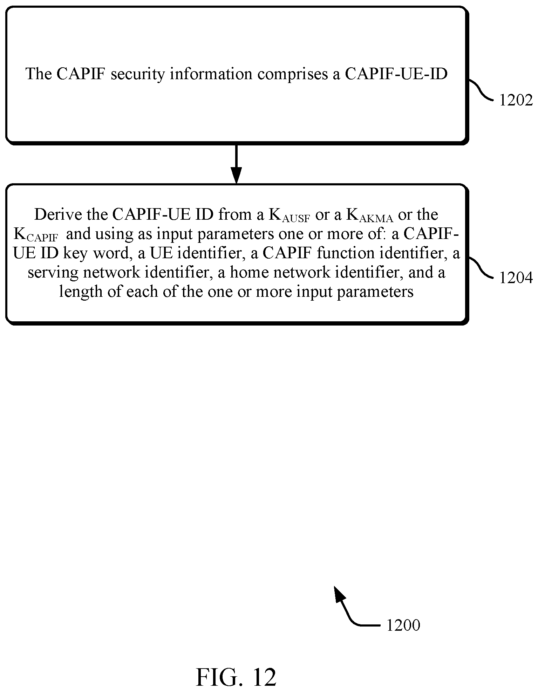

**FIG. 12** illustrates a flowchart of a method 1200 that supports resource owner consent information management in accordance with aspects of the present disclosure. The operations of the method 1200 may be implemented by a device or its components as described herein. For example, the operations of the method 1200 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1202, the method may include the CAPIF security information comprising a CAPIF-UE ID. The operations of 1202 may be performed in accordance with examples as described herein. In some implementations, aspects of the operations of 1202 may be performed by a device as described with reference to FIG. 1.

At 1204, the method may include deriving the CAPIF-UE ID from a K_{AUSF} or a K_{AKMA} or the K_{CAPIF}, and using as input parameters one or more of: a CAPIF-UE ID key word, a UE identifier, a CAPIF function identifier, a serving network identifier, a home network identifier, and a length of each of the one or more input parameters. The operations of 1204 may be performed in accordance with examples as described herein. In some implementations, aspects of the operations of 1204 may be performed by a device as described with reference to FIG. 1.

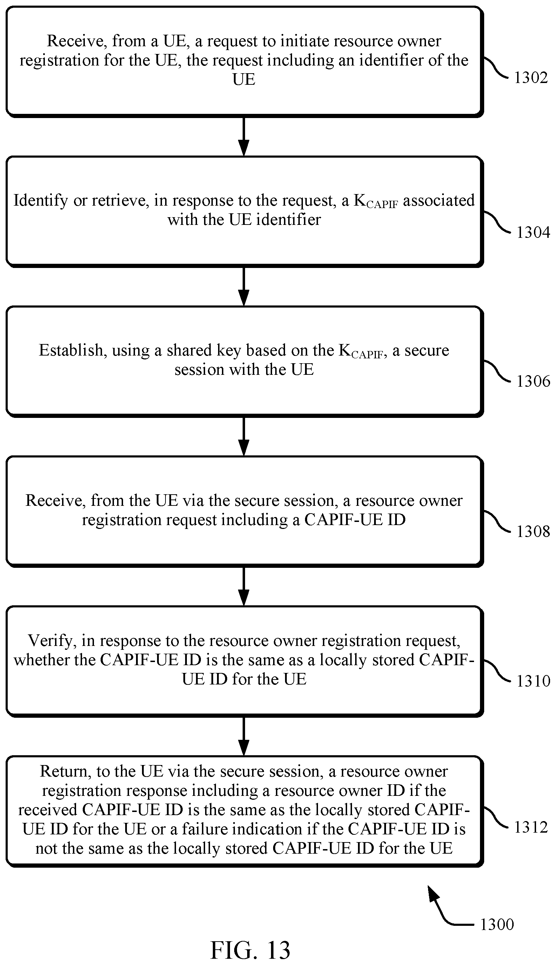

**FIG. 13** illustrates a flowchart of a method 1300 that supports resource owner consent information management in accordance with aspects of the present disclosure. The operations of the method 1300 may be implemented by a device or its components as described herein. For example, the operations of the method 1300 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1302, the method may include receiving, from a UE, a request to initiate resource owner registration for the UE, the request including an identifier of the UE. The operations of 1302 may be performed in accordance with examples as described herein. In some implementations, aspects of the operations of 1302 may be performed by a device as described with reference to FIG. 1.

At 1304, the method may include identifying or retrieving, in response to the request, a K_{CAPIF} associated with the UE identifier. The operations of 1304 may be performed in accordance with examples as described herein. In some implementations, aspects of the operations of 1304 may be performed by a device as described with reference to FIG. 1.

At 1306, the method may include establishing, using a shared key based on the K_{CAPIF}, a secure session with the UE. The operations of 1306 may be performed in accordance with examples as described herein. In some implementations, aspects of the operations of 1306 may be performed by a device as described with reference to FIG. 1.

At 1308, the method may include receiving, from the UE via the secure session, a resource owner registration request including a CAPIF-UE ID. The operations of 1308 may be performed in accordance with examples as described herein. In some implementations, aspects of the operations of 1308 may be performed by a device as described with reference to FIG. 1.

At 1310, the method may include verifying, in response to the resource owner registration request, whether the CAPIF-UE ID is the same as a locally stored CAPIF-UE ID for the UE. The operations of 1310 may be performed in accordance with examples as described herein. In some implementations, aspects of the operations of 1310 may be performed by a device as described with reference to FIG. 1.

At 1312, the method may include returning, to the UE via the secure session, a resource owner registration response including a resource owner ID if the received CAPIF-UE ID is the same as the locally stored CAPIF-UE ID for the UE or a failure indication if the CAPIF-UE ID is not the same as the locally stored CAPIF-UE ID for the UE. The operations of 1312 may be performed in accordance with examples as described herein. In some implementations, aspects of the operations of 1312 may be performed by a device as described with reference to FIG. 1.

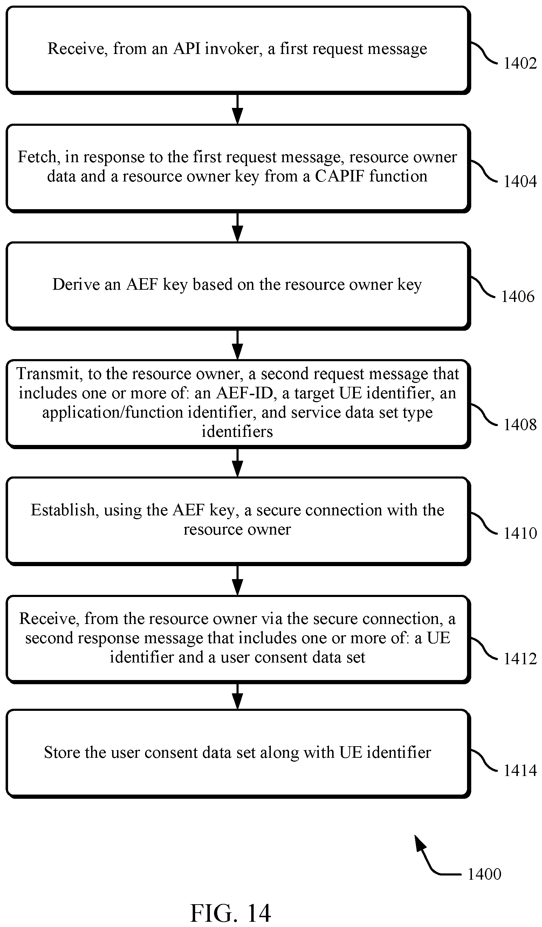

**FIG. 14** illustrates a flowchart of a method 1400 that supports resource owner consent information management in accordance with aspects of the present disclosure. The operations of the method 1400 may be implemented by a device or its components as described herein. For example, the operations of the method 1400 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1402, the method may include receiving, from an API invoker, a first request message. The operations of 1402 may be performed in accordance with examples as described herein. In some implementations, aspects of the operations of 1402 may be performed by a device as described with reference to FIG. 1.

At 1404, the method may include fetching, in response to the first request message, resource owner data and a resource owner key from a CAPIF function. The operations of 1404 may be performed in accordance with examples as described herein. In some implementations, aspects of the operations of 1404 may be performed by a device as described with reference to FIG. 1.

At 1406, the method may include deriving an AEF key based on the resource owner key. The operations of 1406 may be performed in accordance with examples as described herein. In some implementations, aspects of the operations of 1406 may be performed by a device as described with reference to FIG. 1.

At 1408, the method may include transmitting, to the resource owner, a second request message that includes one or more of: an AEF-ID, a target UE identifier, an application/function identifier, and service data set type identifiers. The operations of 1408 may be performed in accordance with examples as described herein. In some implementations, aspects of the operations of 1408 may be performed by a device as described with reference to FIG. 1.

At 1410, the method may include establishing, using the AEF key, a secure connection with the resource owner. The operations of 1410 may be performed in accordance with examples as described herein. In some implementations, aspects of the operations of 1410 may be performed by a device as described with reference to FIG. 1.

At 1412, the method may include receiving, from the resource owner via the secure connection, a second response message that includes one or more of: a UE identifier and a user consent data set. The operations of 1412 may be performed in accordance with examples as described herein. In some implementations, aspects of the operations of 1412 may be performed by a device as described with reference to FIG. 1.

At 1414, the method may include storing the user consent data set along with UE identifier. The operations of 1414 may be performed in accordance with examples as described herein. In some implementations, aspects of the operations of 1414 may be performed by a device as described with reference to FIG. 1.

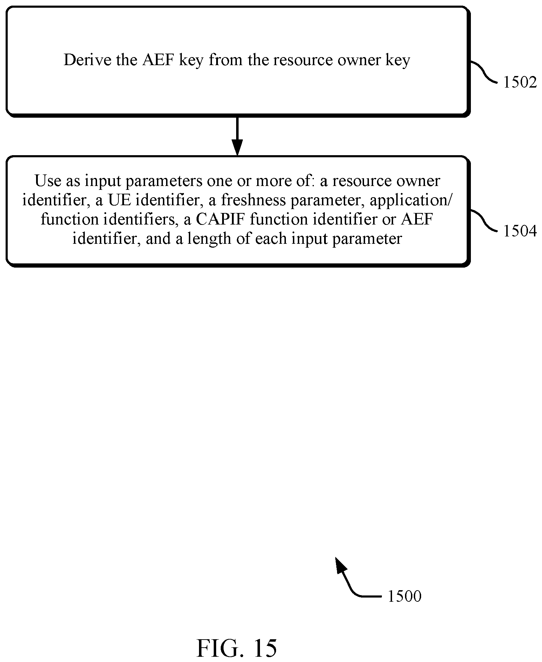

FIG. 15 illustrates a flowchart of a method 1500 that supports resource owner consent information management in accordance with aspects of the present disclosure. The operations of the method 1500 may be implemented by a device or its components as described herein. For example, the operations of the method 1500 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1502, the method may include deriving the AEF key from the resource owner key. The operations of 1502 may be performed in accordance with examples as described herein. In some implementations, aspects of the operations of 1502 may be performed by a device as described with reference to FIG. 1.

At 1504, the method may include using as input parameters one or more of: a resource owner identifier, a UE identifier, a freshness parameter, application/function identifiers, a CAPIF function identifier or AEF identifier, and a length of each input parameter. The operations of 1504 may be performed in accordance with examples as described herein. In some implementations, aspects of the operations of 1504 may be performed by a device as described with reference to FIG. 1.

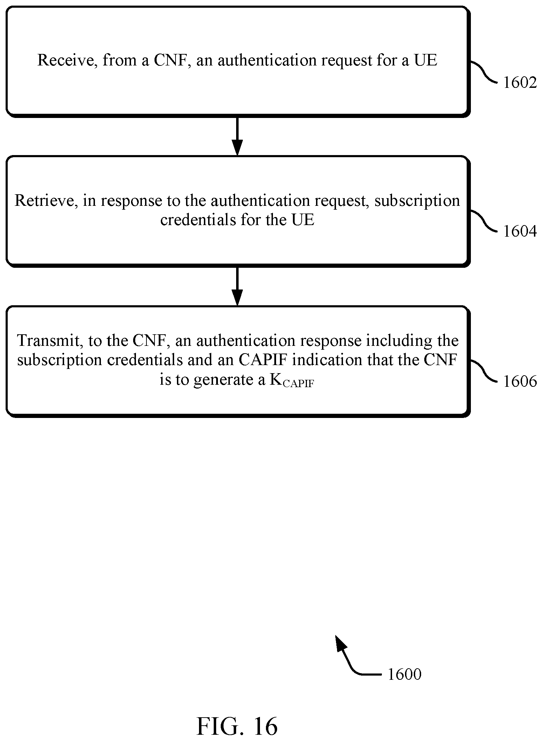

**FIG. 16** illustrates a flowchart of a method 1600 that supports resource owner consent information management in accordance with aspects of the present disclosure. The operations of the method 1600 may be implemented by a device or its components as described herein. For example, the operations of the method 1600 may be performed by a device in the implementing a function in the core network 106, such as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1602, the method may include receiving, from a CNF, an authentication request for a UE. The operations of 1602 may be performed in accordance with examples as described herein. In some implementations, aspects of the operations of 1602 may be performed by a device as described with reference to FIG. 1.

At 1604, the method may include retrieving, in response to the authentication request, subscription credentials for the UE. The operations of 1604 may be performed in accordance with examples as described herein. In some implementations, aspects of the operations of 1604 may be performed by a device as described with reference to FIG. 1.

At 1606, the method may include transmitting, to the CNF, an authentication response including the subscription credentials and an CAPIF indication that the CNF is to generate a K_{CAPIF}. The operations of 1606 may be performed in accordance with examples as described herein. In some implementations, aspects of the operations of 1606 may be performed by a device as described with reference to FIG. 1.

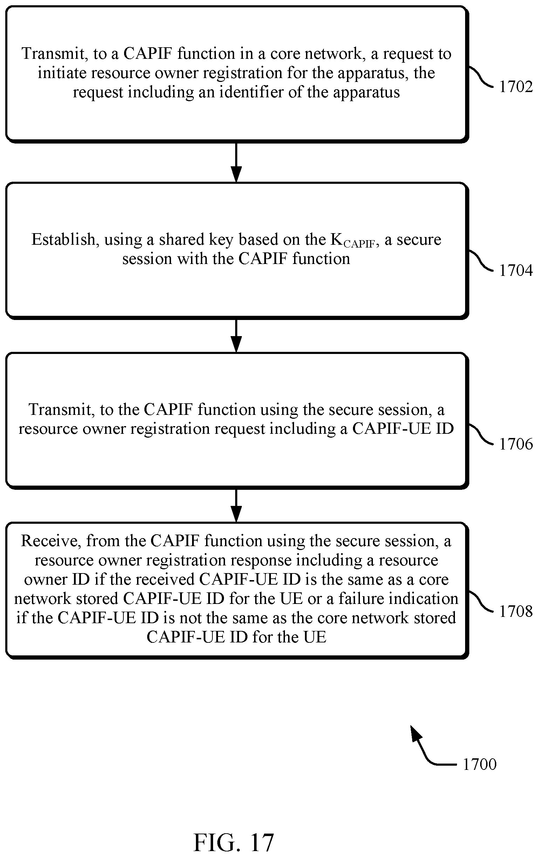

**FIG. 17** illustrates a flowchart of a method 1700 that supports resource owner consent information management in accordance with aspects of the present disclosure. The operations of the method 1700 may be implemented by a device or its components as described herein. For example, the operations of the method 1700 may be performed by a device, such as UE 104 as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1702, the method may include transmitting, to a CAPIF function in a core network, a request to initiate resource owner registration for the apparatus, the request including an identifier of the apparatus. The operations of 1702 may be performed in accordance with examples as described herein. In some implementations, aspects of the operations of 1702 may be performed by a device as described with reference to FIG. 1.

At 1704, the method may include establishing, using a shared key based on the K_{CAPIF}, a secure session with the CAPIF function. The operations of 1704 may be performed in accordance with examples as described herein. In some implementations, aspects of the operations of 1704 may be performed by a device as described with reference to FIG. 1.

At 1706, the method may include transmitting, to the CAPIF function using the secure session, a resource owner registration request including a CAPIF-UE ID. The operations of 1706 may be performed in accordance with examples as described herein. In some implementations, aspects of the operations of 1706 may be performed by a device as described with reference to FIG. 1.

At 1708, the method may include receiving, from the CAPIF function using the secure session, a resource owner registration response including a resource owner ID if the received CAPIF-UE ID is the same as a core network stored CAPIF-UE ID for the UE or a failure indication if the CAPIF-UE ID is not the same as the core network stored CAPIF-UE ID for the UE. The operations of 1708 may be performed in accordance with examples as described herein. In some implementations, aspects of the operations of 1708 may be performed by a device as described with reference to FIG. 1.

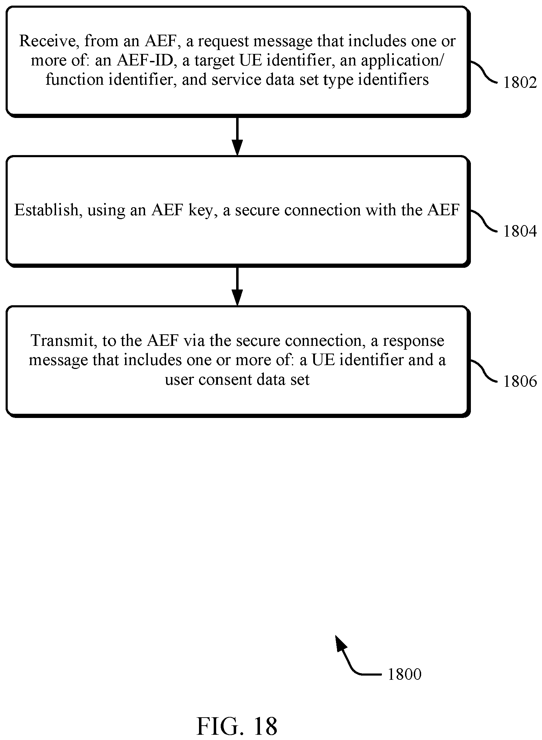

**FIG. 18** illustrates a flowchart of a method 1800 that supports resource owner consent information management in accordance with aspects of the present disclosure. The operations of the method 1800 may be implemented by a device or its components as described herein. For example, the operations of the method 1800 may be performed by a device, such as UE 104 as described with reference to FIGs. 1 through 9. In some implementations, the device may execute a set of instructions to control the function elements of the device to perform the described functions. Additionally, or alternatively, the device may perform aspects of the described functions using special-purpose hardware.

At 1802, the method may include receiving, from an AEF, a request message that includes one or more of: an AEF-ID, a target UE identifier, an application/function identifier, and service data set type identifiers. The operations of 1802 may be performed in accordance with examples as described herein. In some implementations, aspects of the operations of 1802 may be performed by a device as described with reference to FIG. 1.

At 1804, the method may include establishing, using an AEF key, a secure connection with the AEF. The operations of 1804 may be performed in accordance with examples as described herein. In some implementations, aspects of the operations of 1804 may be performed by a device as described with reference to FIG. 1.

At 1806, the method may include transmitting, to the AEF via the secure connection, a response message that includes one or more of: a UE identifier and a user consent data set. The operations of 1806 may be performed in accordance with examples as described herein. In some implementations, aspects of the operations of 1806 may be performed by a device as described with reference to FIG. 1.

It should be noted that the methods described herein describe possible implementations, and that the operations and the steps may be rearranged or otherwise modified and that other implementations are possible. Further, aspects from two or more of the methods may be combined. The order in which the methods are described is not intended to be construed as a limitation, and any number or combination of the described method operations may be performed in any order to perform a method, or an alternate method.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Further aspects of the present disclosure are provided by the subject matter of the following numbered clauses.

Clause 1. An apparatus, comprising: a transceiver; and a processor coupled to the transceiver, the processor and the transceiver configured to cause the apparatus to: transmit, to a unified data management, an authentication request for a user equipment; receive, from the unified data management, an authentication response including an indication; derive, in response to receiving the indication, common application programming interface framework security information; and store the common application programming interface framework security information as a user equipment context along with an identifier of the user equipment.

Clause 2. The apparatus of clause 1, the authentication response further including one or more of a common application programming interface framework function identifier, a common application programming interface framework function address, a generic public subscription identifier, and a user equipment identifier.

Clause 3. The apparatus of clause 1, wherein the common application programming interface framework security information comprises one or more of a common application programming interface framework-user equipment identifier and a common application programming interface framework key.

Clause 4. The apparatus of clause 3, wherein the processor is further configured to cause the apparatus to derive the common application programming interface framework key from an authentication server function key or an authentication and key management for application key, and using as input parameters one or more of: a common application programming interface framework key word, a user equipment identifier, a common application programming interface framework function identifier, a serving network identifier, a home network identifier, and a length of each of the one or more input parameters.

Clause 5. The apparatus of clause 3, wherein the processor is further configured to cause the apparatus to derive the common application programming interface framework-user equipment identifier from the common application programming interface framework key or an authentication server function key or an authentication and key management for application key and using as input parameters one or more of: a common application programming interface framework-user equipment identifier key word, a user equipment identifier, a common application programming interface framework function identifier, a serving network identifier, a home network identifier, and a length of each of the one or more input parameters.

Clause 6. The apparatus of clause 1, wherein the processor and the transceiver are further configured to cause the apparatus to transmit, to a user equipment via an intermediate access and mobility management function, a common application programming interface framework registration related information that includes one or more of: a common application programming interface framework function identifier, a common application programming interface framework function address, a generic public subscription identifier, and a common application programming interface framework-user equipment identifier.

Clause 7. An apparatus, comprising: a transceiver; and a processor coupled to the transceiver, the processor and the transceiver configured to cause the apparatus to: receive, from a user equipment, a request to initiate resource owner registration for the user equipment, the request including an identifier of the user equipment; identify or retrieve, in response to the request, a common application programming interface framework key associated with the user equipment identifier; establish, using a shared key based on the common application programming interface framework key, a secure session with the user equipment; receive, from the user equipment via the secure session, a resource owner registration request including a common application programming interface framework-user equipment identifier; verify, in response to the resource owner registration request, whether the common application programming interface framework-user equipment identifier is the same as a locally stored common application programming interface framework-user equipment identifier for the user equipment; and return, to the user equipment via the secure session, a resource owner registration response including a resource owner identifier if the received common application programming interface framework-user equipment identifier is the same as the locally stored common application programming interface framework-user equipment identifier for the user equipment or a failure indication if the common application programming interface framework-user equipment identifier is not the same as the locally stored common application programming interface framework-user equipment identifier for the user equipment.

Clause 8. The apparatus of clause 7, wherein the shared key is the common application programming interface framework key.

Clause 9. The apparatus of clause 7, wherein the processor is further configured to cause the apparatus to derive the shared key from the common application programming interface framework key using as input parameters one or more of: the user equipment identifier, the common application programming interface framework-user equipment identifier, a common application programming interface framework registration key word, a common application programming interface framework function identifier, a random number, and a nonce included in the request to initiate resource owner registration.

Clause 10. The apparatus of clause 7, wherein the resource owner registration response includes a failure indication if there is no common application programming interface framework-user equipment identifier available for the user equipment.

Clause 11. The apparatus of clause 7, wherein the processor is further configured to cause the apparatus to derive the resource owner identifier from the shared key using as input parameters one or more of: the resource owner identifier, a user equipment identifier, a common application programming interface framework function identifier, a serving network identifier, an home network identifier, and a length of each of the one or more input parameters.

Clause 12. The apparatus of clause 7, wherein the resource owner registration response further includes a lifetime parameter indicating a duration of validity of the resource owner identifier.

Clause 13. An apparatus, comprising: a transceiver; and a processor coupled to the transceiver, the processor and the transceiver configured to cause the apparatus to: receive, from an API invoker, a first request message; fetch, in response to the first request message, resource owner data and a resource owner key from a common application programming interface framework function; derive an application programming interface exposing function key based on the resource owner key; transmit, to the resource owner, a second request message that includes one or more of: an application programming interface exposing function identifier, a target user equipment identifier, an application/function identifier, and service data set type identifiers; establish, using the application programming interface exposing function key, a secure connection with the resource owner; receive, from the resource owner via the secure connection, a second response message that includes one or more of: a user equipment identifier and a user consent data set; and store the user consent data set along with user equipment identifier.

Clause 14. The apparatus of clause 13, wherein the second request message further includes a resource owner identifier.

Clause 15. The apparatus of clause 13, wherein the user consent data set includes one or more of: an application/function identifier, one or more service data types, and a consent status.

Clause 16. The apparatus of clause 15, wherein the consent status is indicated as one of: accept or allowed, denied or not allowed, revoked/updated.

Clause 17. The apparatus of clause 15, wherein the processor and the transceiver are further configured to cause the apparatus to transmit, to the API invoker, a third response message based on the consent status.

Clause 18. The apparatus of clause 13, wherein the processor and the transceiver are further configured to cause the apparatus to derive the application programming interface exposing function key from the resource owner key and using as input parameters one or more of: a resource owner identifier, a user equipment identifier, a freshness parameter, application/function identifiers, a common application programming interface framework function identifier or application programming interface exposing function identifier, and a length of each input parameter.

Clause 19. The apparatus of clause 18, wherein the freshness parameter comprises one or more of a counter, a random number, and a nonce.

Clause 20. The apparatus of clause 13, wherein the application programming interface exposing function key comprises a common application programming interface framework key.

## Claims

1. An apparatus for wireless communication, comprising:
at least one memory; and
at least one processor coupled with at least one memory and configured to cause the apparatus to:
receive, from an application programming interface, API, invoker, a first request message;
fetch, in response to the first request message, resource owner data and a resource owner key from a common application programming interface framework function;
derive an application programming interface exposing function key based on the resource owner key;
transmit, to the resource owner, a second request message that includes one or more of: an application programming interface exposing function identifier, a target user equipment identifier, an application/function identifier, and service data set type identifiers;
establish, using the application programming interface exposing function key, a secure connection with the resource owner;
receive, from the resource owner via the secure connection, a second response message that includes one or more of: a user equipment identifier and a user consent data set; and
store the user consent data set along with the user equipment identifier.

2. The apparatus of claim 1, wherein the second request message further includes a resource owner identifier.

3. The apparatus of claim 1, wherein the user consent data set includes one or more of: an application/function identifier, one or more service data types, and a consent status.

4. The apparatus of claim 3, wherein the consent status is indicated as one of: accept or allowed, denied or not allowed, revoked/updated.

5. The apparatus of claim 3 or claim 4, wherein the at least one processor is further configured to cause the apparatus to transmit, to the API invoker, a third response message based on the consent status.

6. The apparatus of claim 3, wherein the at least one processor is further configured to cause the apparatus to derive the application programming interface exposing function key from the resource owner key and using as input parameters one or more of: a resource owner identifier, a user equipment identifier, a freshness parameter, application/function identifiers, a common application programming interface framework function identifier or application programming interface exposing function identifier, and a length of each input parameter.

7. The apparatus of claim 6, wherein the freshness parameter comprises one or more of a counter, a random number, and a nonce.

8. The apparatus of claim 1, wherein the application programming interface exposing function key comprises a common application programming interface framework key.

9. The apparatus of claim 1, wherein the first request message comprises an API invocation request and the user consent data set indicates that the API invocation is denied, and the at least one processor is further configured to cause the apparatus to transmit, to the API interface invoker, a response message indicating that the API invocation request is denied.

10. A method for wireless communication, comprising:
receiving, from an application programming interface, API, invoker, a first request message;
fetching, in response to the first request message, resource owner data and a resource owner key from a common application programming interface framework function;
deriving an application programming interface exposing function key based on the resource owner key;
transmitting, to the resource owner, a second request message that includes one or more of: an application programming interface exposing function identifier, a target user equipment identifier, an application/function identifier, and service data set type identifiers;
establishing, using the application programming interface exposing function key, a secure connection with the resource owner;
receiving, from the resource owner via the secure connection, a second response message that includes one or more of: a user equipment identifier and a user consent data set; and
storing the user consent data set along with the user equipment identifier.

11. The method of claim 10, wherein the second request message further includes a resource owner identifier.

12. The method of claim 10, wherein the user consent data set includes one or more of: an application/function identifier, one or more service data types, and a consent status.

13. The method of claim 12, wherein the consent status is indicated as one of: accept or allowed, denied or not allowed, revoked/updated.

14. The method of claim 12 or claim 13, further comprising transmitting, to the API invoker, a third response message based on the consent status.

15. A processor for wireless communication, comprising a controller coupled with at least one memory and configured to cause the processor to:
receive, from an application programming interface, API, invoker, a first request message;
fetch, in response to the first request message, resource owner data and a resource owner key from a common application programming interface framework function;
derive an application programming interface exposing function key based on the resource owner key;
transmit, to the resource owner, a second request message that includes one or more of: an application programming interface exposing function identifier, a target user equipment identifier, an application/function identifier, and service data set type identifiers;
establish, using the application programming interface exposing function key, a secure connection with the resource owner;
receive, from the resource owner via the secure connection, a second response message that includes one or more of: a user equipment identifier and a user consent data set; and
store the user consent data set along with the user equipment identifier.
